# EUROPEAN PATENT SPECIFICATION

(11) **EP 3 579 518 B1**
(45) Date of publication and mention of the grant of the patent: **18.08.2021**
(21) Application number: 17901262.0
(22) Date of filing: 13.03.2017
(51) Int. Cl.: H04L 29/06, G06Q 20/32, G06Q 20/40

(54) **PAYMENT METHOD AND DEVICE BASED ON VERIFICATION TERMINAL**
ZAHLUNGSVERFAHREN UND VORRICHTUNG AUF DER BASIS EINES PRÜFUNGSTERMINALS
PROCÉDÉ ET DISPOSITIF DE PAIEMENT BASÉS SUR UN TERMINAL DE VÉRIFICATION

(43) Date of publication of application: 11.12.2019
(73) Proprietor: Huawei Technologies Co., Ltd., Longgang District Shenzhen, Guangdong 518129 (CN)
(72) Inventor: ZHAO, Xiaona, Shenzhen Guangdong 518129 (CN); MEI, Jingqing, Shenzhen Guangdong 518129 (CN); LI, Guoqing, Shenzhen Guangdong 518129 (CN)
(74) Representative: Epping - Hermann - Fischer
(86) International application number: PCT/CN2017/076504
(87) International publication number: WO 2018/165830

(56) References cited:
- WO-A1-2015/027849
- CN-A- 104 657 851
- CN-A- 104 793 864
- CN-A- 106 161 108
- Anonymous: "How-To: Use Apple Pay on the web with Safari in iOS 10 and macOS Sierra - 9to5Mac", , 5 October 2016 (2016-10-05), XP055634727, Retrieved from the Internet: URL:https://9to5mac.com/2016/10/05/how-to- use-apple-pay-web-safari/ [retrieved on 2019-10-22]

## Description

### TECHNICAL FIELD

The present invention relates to the field of network payment technologies, and in particular, to an authentication terminal-based payment method and an apparatus.

### BACKGROUND

At present, a lot of payment service providers have provided a web page payment function, that is, when shopping online on a computer, a user may directly make payment on a web page, such as Apple Pay, Google Wallet, Alipay, and WeChat Pay. To free a user from entering private and sensitive data such as a card number, an account, or a password on a web page, some payment service providers, such as Apple Pay and Alipay, provide a mobile phone-assisted web page payment function. To be specific, a payment authorization procedure is completed on a mobile phone instead of on a computer.

In an example in the prior art, after a user chooses a commodity and places an order, the user directly selects a payment method for payment, and a web page pops up to prompt the user to use a mobile terminal such as a mobile phone to perform payment authorization.

Apple Pay web page payment is used as an example. When a user shops online on a computer by using an Apple Pay web page payment function, if it is determined that a logged-in account of a mobile terminal (such as a mobile phone or a watch) within the computer's Bluetooth communication range and a logged-in account of the computer are same accounts (for example, an Apple ID), a payment authorization notification is pushed to the mobile terminal. In this case, the user may perform identity authentication on the mobile terminal, for example, authenticate a fingerprint or enter a PIN, to complete payment authorization.

In the foregoing example, when using the web page payment function, the user needs to ensure that the computer and the mobile phone are within a Bluetooth communication range and have logged in to a same account. However, in family or other use scenarios, a plurality of people use a same computer, and an account logged in on the computer may be an account of any one (for example, a user A) among the plurality of people. In this case, when a user B shops online on the computer, if the user B forgets to switch to an ID of the user B, a mobile terminal of the user B cannot receive a payment authorization request. This may lead to unsuccessful or non-timely payment, poor user experience, and the like. To avoid the problem, the user needs to switch to the account of the user manually. This makes operation steps complex and affects user experience.

Document Anonymous: "How-To: Use Apple Pay on the web with Safari in iOS 10 and macOS Sierra", URL:https://9to5mac.com/2016/10/05/how-to-use-apple-pay-web-safari relates to macOS Sierra and iOS 10 which allow Apply Pay on the web through Safari. Apple pay was previously not available on the Mac and required apps for use on the iPhone and iPad. Apple Pay makes checking out online secure and convenient without the need to fill out billing and shipping information with an online form.

### SUMMARY

The independent claims define the scope of protection of the invention. Embodiments of the present invention provide an authentication terminal-based payment method and an apparatus. When a user (for example, each member of a family) does shopping online by using a web page payment function on a user terminal (for example, a computer shared by the family), a payment authorization notification can be accurately pushed to a most proper authentication terminal (a mobile terminal such as a mobile phone or a watch of the current user); and when a logged-in account (for example, an Apple ID) of the user terminal is inconsistent with a logged-in account of the authentication terminal, fast account switching can be implemented, without requiring the user to manually switch to or log in to the logged-in account of the authentication terminal in advance. This can implement a seamless shift from web page payment made on the user terminal to payment authorization performed on the authentication terminal of the current user, thereby ensuring consistent user experience.

The specific embodiments of the present invention are defined by the appended claims. When it is determined that the logged-in account of the authentication terminal that performs authorization on a payment operation is different from the logged-in account of the user terminal that needs to perform the payment operation, the user terminal is fast switched from the logged-in account to the logged-in account of the authentication terminal through authorization by the authentication terminal. This avoids trouble caused by manual input of an account and a password by a user, and ensures consistent user experience. In the following, parts of the description and drawings referring to embodiments which are not covered by the claims are not presented as embodiments of the invention, but as examples useful for understanding the invention.

### BRIEF DESCRIPTION OF DRAWINGS

FIG. 1 shows an example of a payment scenario according to a specific embodiment of the present invention;
FIG. 2 is a method flowchart illustrating that a server performs account verification and performs account switching to complete payment according to a specific embodiment of the present invention;
FIG. 3A and FIG. 3B are a method flowchart illustrating that a server performs account verification and a user terminal performs account switching to complete payment according to a specific embodiment of the present invention;
FIG. 4 is a method flowchart illustrating that a server performs account verification and an authentication terminal performs account switching to complete payment according to a specific embodiment of the present invention;
FIG. 5A and FIG. 5B are a method flowchart illustrating that a user terminal obtains a result of verification and a server or an authentication terminal performs account switching to complete payment according to a specific embodiment of the present invention;
FIG. 6 is a method flowchart illustrating that a user terminal performs account verification and performs account switching to complete payment according to a specific embodiment of the present invention;
FIG. 7A and FIG. 7B are a method flowchart illustrating that a user terminal obtains, by using a server, a logged-in account of an authentication terminal and performs account verification and the server or the authentication terminal performs account switching to complete payment according to a specific embodiment of the present invention;
FIG. 8A, FIG. 8B and FIG. 8C are a method flowchart illustrating that a user terminal obtains, by using an authentication terminal, a logged-in account of the authentication terminal and performs account verification and a server or the authentication terminal performs account switching to complete payment according to a specific embodiment of the present invention;
FIG. 9A and FIG. 9B are a method flowchart illustrating that a user terminal obtains a logged-in account of an authentication terminal and a server performs account switching to complete payment according to a specific embodiment of the present invention;
FIG. 10 shows a user terminal according to a specific embodiment of the present invention;
FIG. 11 shows a server according to a specific embodiment of the present invention;
FIG. 12 shows a user terminal according to a specific embodiment of the present invention;
FIG. 13 shows a server according to a specific embodiment of the present invention;
FIG. 14 shows a user terminal according to an embodiment of the present invention; and
FIG. 15 shows a server according to an embodiment of the present invention.

### DESCRIPTION OF EMBODIMENTS

The following further details the technical solutions in embodiments of the present invention with reference to the accompanying drawings and the embodiments.

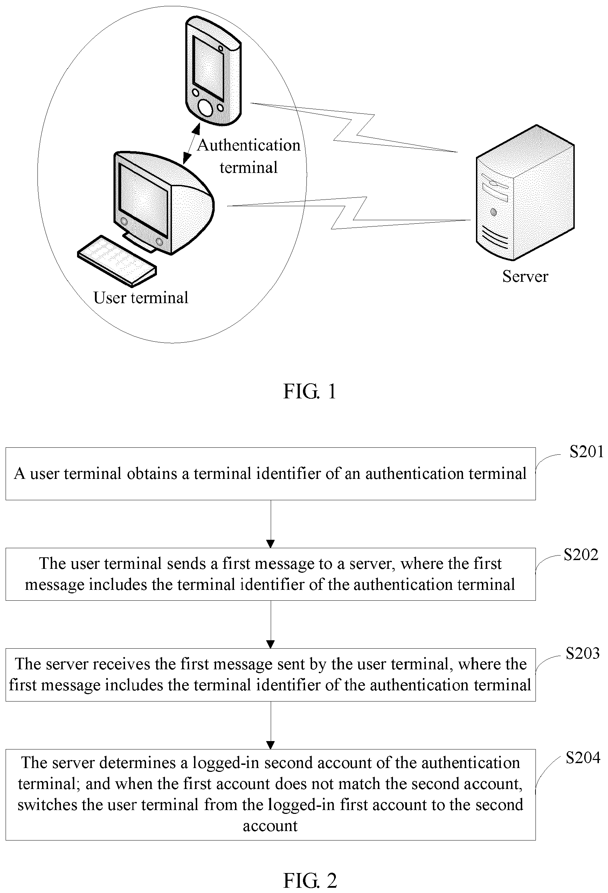

The specific embodiments of the present invention provide an authentication terminal-based payment method and an apparatus. When making web page payment on a user terminal, a user needs to determine an authentication terminal and ensure that a logged-in account of the user terminal is consistent with a logged-in account of the authentication terminal (that is, if the accounts that have been logged in on the user terminal and the authentication terminal are inconsistent, the accounts that have been logged in on the two terminals need to be made consistent through account switching), so that the authentication terminal performs authentication for a payment authorization procedure for web page payment. FIG. 1 shows an example of a payment scenario according to a specific embodiment of the present invention. As shown in FIG. 1, a user terminal, an authentication terminal, and a server are included. The user terminal may be an electronic device such as a personal computer (PC, personal computer), a notebook computer, a tablet computer, or a smartphone. The authentication terminal may be a smartwatch, a smart band, a mobile phone, a mobile computer, a tablet computer, a personal digital assistant (Personal Digital Assistant, PDA), a wearable device (Wearable Device), or the like. In this specific embodiment of the present invention, the user terminal and the authentication terminal each may be used as both a user terminal and an authentication terminal in different scenarios. For example, during web page payment by using a personal computer, payment authorization may be performed by using a tablet computer, a smartphone, or the like. During web page payment by using a tablet computer or a smartphone, payment authorization is performed by using the same tablet computer or smartphone or by using another tablet computer or smartphone. Certainly, when one device is used as both a user terminal and an authentication terminal, logged-in accounts are definitely the same, and account switching is not required.

The user terminal may directly communicate with the authentication terminal in a communication manner (in a wireless manner such as Bluetooth, Wi-Fi, or Near Field Communication, or in a wired manner). The user terminal and the authentication terminal may communicate with the server by using a network. The user terminal may communicate with an external device by using a bus and different interfaces, for example, may be connected to the server by using an Ethernet interface. The authentication terminal may communicate with the server by using a communications unit.

During web page payment made on the user terminal, the user terminal detects a terminal within a communication range of the user terminal and determines the terminal as the authentication terminal. When a logged-in account of the user terminal is consistent with a logged-in account of the authentication terminal, the authentication terminal performs payment authorization for the user terminal.

In a first aspect, the user terminal may send a payment request to the server. When the logged-in account of the user terminal matches the logged-in account of the authentication terminal (the accounts are the same or are bound to each other, and a specific case is described in the following embodiment), the authentication terminal performs payment authorization for the user terminal. When the logged-in account of the user terminal does not match the logged-in account of the authentication terminal (the accounts are different or are not bound to each other, and a specific case is described in the following embodiment), the authentication terminal may perform authorization for switching the user terminal from the logged-in account to the logged-in account of the authentication terminal, and then perform payment authorization for the user terminal.

In a second aspect, the user terminal may send an authentication terminal account obtaining request to the server or the authentication terminal; and determine whether the logged-in account of the user terminal matches the logged-in account of the authentication terminal. When the two accounts match, the user terminal sends a payment request to the server, and the authentication terminal performs payment authorization for the user terminal. When the logged-in account of the user terminal does not match the logged-in account of the authentication terminal, the authentication terminal may perform authorization for switching the user terminal from the logged-in account to the logged-in account of the authentication terminal, and then perform payment authorization for the user terminal.

The following describes in more detail, by using method embodiments, a process in which the user terminal makes web page payment in the specific embodiments of the present invention.

FIG. 2 is a method flowchart illustrating that a server performs account verification and performs account switching to complete payment according to a specific embodiment of the present invention. As shown in FIG. 2, the method includes the following steps.

S201. A user terminal obtains a terminal identifier of an authentication terminal.

When making web page payment by using the user terminal, a user triggers a payment operation. Specifically, the payment operation may be triggered when a payment button on a web page is being clicked. In this specific embodiment of the present invention, the payment operation may alternatively be triggered when the user performs an operation, such as powering on the user terminal or logging in to a merchant's web page. A case of triggering the payment operation is not specifically limited in the present invention.

The user terminal may directly communicate with a plurality of different target terminals. The user terminal finds, though detection, a plurality of different target terminals that are within a specific distance from the user terminal. The user terminal sends a request to the plurality of different target terminals, to establish a communication connection to the plurality of different target terminals and obtain terminal identifiers sent by the target terminals.

In a possible case of the present invention, the user terminal communicates with a target terminal through Bluetooth. When finding a Bluetooth module included in the target terminal by using a Bluetooth module included in the user terminal, the user terminal sends a request to the target terminal. The user terminal and the target terminal establish a Bluetooth connection, and communicate with each other through Bluetooth. After establishing the Bluetooth connection to the target terminal, the user terminal further obtains a terminal identifier of the target terminal.

In this specific embodiment of the present invention, the terminal identifier of the target terminal may be an identifier of hardware included in the target terminal, for example, may be a Bluetooth address or a network interface card address. The identifier of the target terminal is not limited in this specific embodiment of the present invention.

In another possible embodiment of the present invention, the user terminal may alternatively communicate with a target terminal through NFC (Near Field Communication). When finding an NFC module included in the target terminal by using an NFC module of the user terminal, the user terminal communicates with the NFC module of the authentication terminal by using the NFC module of the user terminal, to obtain a terminal identifier corresponding to the target terminal.

Before communicating with the target terminal through NFC, the user terminal may select a web page payment function, and then prompt, by using a user interface (UI, user interface), the user to connect the user terminal to the target terminal in an NFC tapping manner. When the target terminal approaches the user terminal, the user terminal may read the terminal identifier of the target terminal from the target terminal in a read/write mode (Reader/Writer Mode). Alternatively, the user terminal may request, in a peer-to-peer mode (P2P Mode), the target terminal to send the terminal identifier of the target terminal to the user terminal.

When establishing a communication connection to one target terminal, the user terminal determines the target terminal as the authentication terminal.

When detecting a plurality of target terminals, the user terminal further needs to select, from the plurality of detected target terminals, one target terminal as the authentication terminal.

In a specific embodiment of the present invention, the selecting, from the plurality of target terminals, one target terminal as the authentication terminal may be: The user terminal performs selection based on distances between the user terminal and the target terminals; the user terminal performs selection from target terminals trusted by the user terminal; the user proactively performs selection based on display of the user terminal; or a server performs selection.

When the user terminal performs selection based on the distances between the user terminal and the target terminals, the user terminal determines a relative distance (for example, a relative Bluetooth distance) between the user terminal and each of the plurality of different target terminals, and determines, from the plurality of target terminals, a target terminal nearest to the user terminal as the authentication terminal.

In an example in which the user terminal performs selection from the target terminals trusted by the user terminal, the user terminal stores a terminal identifier of one or more target terminals trusted by the user terminal. When detecting a plurality of target terminals, the user terminal determines, from the plurality of detected target terminals, one target terminal as the authentication terminal based on the terminal identifier of the one or more target terminals prestored in the user terminal.

When detecting a plurality of target terminals trusted by the user terminal, the user terminal further needs to select, from the plurality of trusted target terminals, one target terminal as the authentication terminal. The selecting, from the plurality of trusted target terminals, one target terminal as the authentication terminal may be: selecting any trusted target terminal; selecting a target terminal nearest to the user terminal as the authentication terminal; or displaying the plurality of trusted target terminals by using a user interface (UI, user interface) of the user terminal, so that the user selects one target terminal as the authentication terminal in the user interface of the user terminal.

In an example in which the user proactively selects the authentication terminal, the user terminal displays, by using the UI interface of the user terminal, a plurality of detected target terminals or a plurality of trusted target terminals detected by the user terminal. The user operates on the user terminal to determine, from the plurality of target terminals displayed in the user interface, one target terminal as the authentication terminal.

In an example in which the server determines, from the plurality of target terminals, one target terminal as the authentication terminal, the user terminal sends authentication terminal determining information to the server, where the authentication terminal determining information includes terminal identifiers of the plurality of target terminals. The server determines, from the plurality of target terminals, one target terminal matching the user terminal as the authentication terminal.

In an example in which the server determines, from the plurality of target terminals, one target terminal as the authentication terminal, in one aspect, the server may determine the authentication terminal by itself. For example, the server determines, from the N target terminals, M target terminals whose logged-in accounts match the first account, and determines, from the M target terminals, one target terminal as the authentication terminal according to a preset manner.

In another aspect, the server may determine the authentication terminal by using the user terminal. For example, when determining, from the N target terminals, M target terminals whose logged-in accounts match the first account or when determining that no logged-in account of any of the N target terminals does match the first account, the server sends determining information to the user terminal. The user terminal selects one target terminal as the authentication terminal based on the determining information. The user terminal may perform selection based on distances between the user terminal and the target terminals; the user terminal performs selection from target terminals trusted by the user terminal; or the user proactively performs selection based on display of the user terminal.

The preset manner may include any one or more of an account use frequency, an account priority, a terminal identifier associated with the first account and stored in the server, or an account associated with a user terminal identifier and stored in the server.

When the server determines, from the N target terminals, the M target terminals whose logged-in accounts match the first account, the determining message sent by the server to the user terminal includes the M target terminals whose logged-in accounts match the first account. When the server determines that no logged-in account of any of the N target terminals does match the first account, the determining message sent by the server to the user terminal includes terminal identifiers of the N target terminals.

In this specific embodiment of the present invention, that the first account does not match a second account specifically includes: the first account is different from the second account, or the first account and the second account are different and are not bound to each other; and that the first account matches the second account specifically includes: the first account is the same as the second account, or the first account and the second account are different and are bound to each other.

S202. The user terminal sends a first message to a server, where the first message includes the terminal identifier of the authentication terminal.

In this specific embodiment of the present invention, when determining the authentication terminal, the user terminal further sends the first message to the server. The first message includes the terminal identifier of the authentication terminal.

S203. The server receives the first message sent by the user terminal, where the first message includes the terminal identifier of the authentication terminal.

The first message received by the server may be an account verification request sent by the user terminal, or may be a payment request sent by the user terminal.

When receiving the first message sent by the user terminal, the server further needs to determine the logged-in second account of the authentication terminal based on the terminal identifier of the authentication terminal included in the first message; and determine, based on a terminal identifier of the user terminal sending the first message, the logged-in first account of the user terminal.

S204. The server determines a logged-in second account of the authentication terminal; and when the first account does not match the second account, switches the user terminal from the logged-in first account to the second account, and completes payment authorization for this payment transaction by using the authentication terminal.

The server further verifies the logged-in first account of the user terminal with the second account; and when the first account does not match the second account, switches the user terminal from the logged-in first account to the second account, and completes payment authorization for this payment transaction by using the authentication terminal; or when the first account matches the second account, completes payment authorization for this payment transaction by using the authentication terminal.

That the first account does not match the second account specifically includes: the first account is different from the second account, or the first account and the second account are different and are not bound to each other. That the first account matches the second account specifically includes: the first account is the same as the second account, or the first account and the second account are different and are bound to each other.

In this specific embodiment of the present invention, the server may send a result of verification to the user terminal, and the user terminal performs determining and performs corresponding processing. The server may alternatively perform processing by itself based on whether the first account matches the second account.

There are a plurality of manners of performing processing by the server itself based on whether the first account matches the second account. The following describes three manners.

In a first aspect, the user terminal sends an account switching authorization request including the terminal identifier of the user terminal to the authentication terminal based on the second message. The authentication terminal sends an authorization notification to the server based on the terminal identifier of the user terminal. The server switches the user terminal from the logged-in first account to the second account based on the authorization notification.

In a second aspect, the user terminal may alternatively send account switching notification authorization to the server based on the second message. The server sends an account switching authorization request to the authentication terminal based on the account switching notification authorization, to request, from the authentication terminal, authorization to switch the user terminal from the logged-in first account to the second account. The server switches the user terminal from the logged-in first account to the second account based on the authorization notification.

In a third aspect, the user terminal sends an account switching request including the second account and a password of the second account to the server, so that the server switches the user terminal from the logged-in first account to the second account.

The following describes a case in which the server may send a result of verification to the user terminal, and the user terminal performs processing. The user terminal receives a third message sent by the server, where the third message includes the result of verification performed by the server on the first account and the second account.

In one aspect, when determining, based on the third message, that the first account does not match the second account, the user terminal sends an account switching authorization request including the terminal identifier of the user terminal to the authentication terminal. The authentication terminal authorizes, based on the terminal identifier of the user terminal, the server to switch the user terminal from the logged-in first account to the second account.

In another aspect, when determining, based on the third message, that the first account does not match the second account, the user terminal sends, to the server, a message used to indicate approval of performing account switching. The server requests, from the authentication terminal based on the terminal identifier of the authentication terminal, authorization to switch the user terminal from the logged-in first account to the second account.

In still another aspect, when determining, based on the third message, that the first account does not match the second account, the user terminal sends an account switching request including the second account and a password of the second account to the server, so that the server switches the user terminal from the logged-in first account to the second account.

To describe the foregoing method in more detail, the following provides more details about a mobile terminal-assisted web page payment method by using different examples.

In the first example shown in FIG. 2, after obtaining the identifier of the authentication terminal, the user terminal requests the server to verify the logged-in accounts of the two terminals. Operations to be performed after the server performs the verification may be described in the following three specific embodiments.

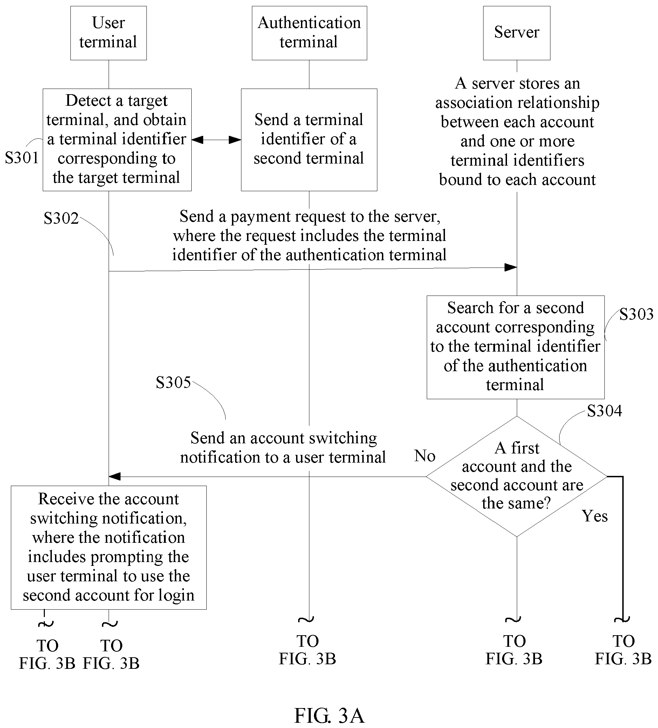

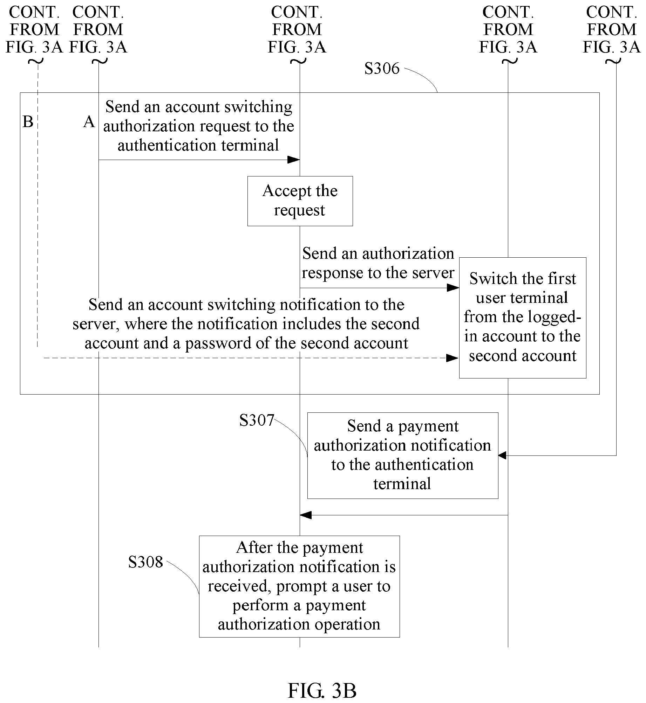

Specific embodiment 1-1: When determining that the logged-in accounts of the two terminals are different, the server proactively pushes an account switching notification to the user terminal, to complete account switching. Details are provided in the following method flowchart shown in FIG. 3A and FIG. 3B.

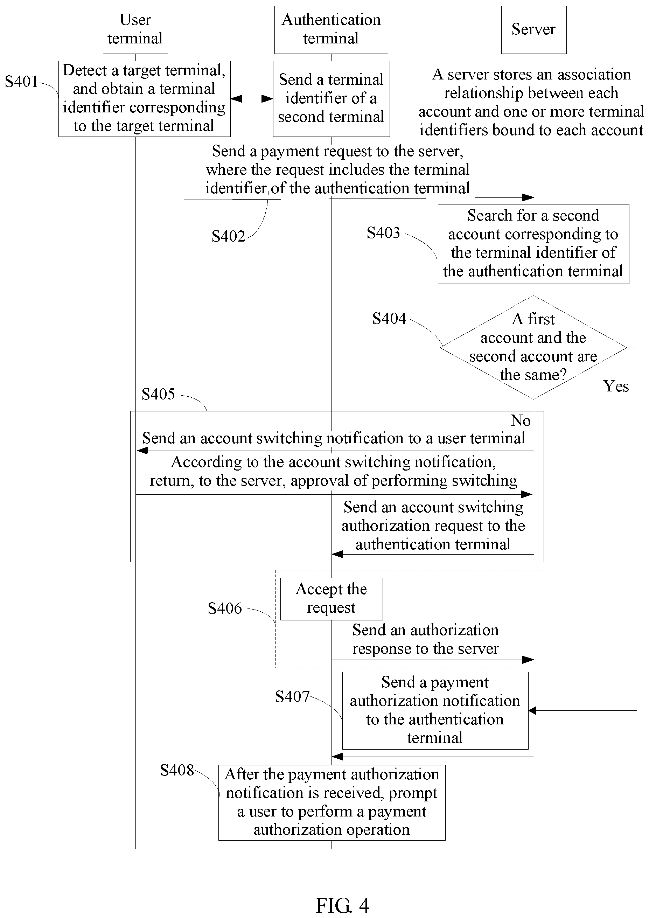

Specific embodiment 1-2: When determining that the logged-in accounts of the two terminals are different, the server proactively pushes an account switching authorization request to the authentication terminal, to request the authentication terminal to perform authorization for account switching. Details are provided in the following method flowchart shown in FIG. 4.

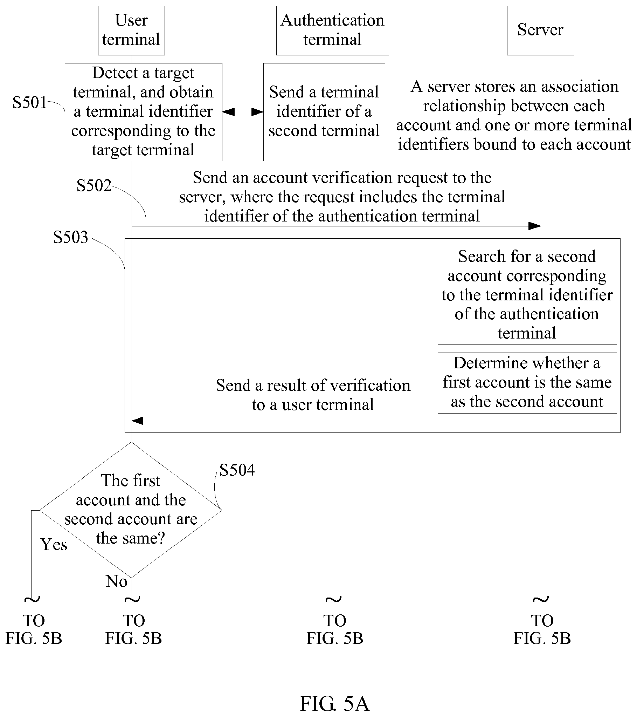

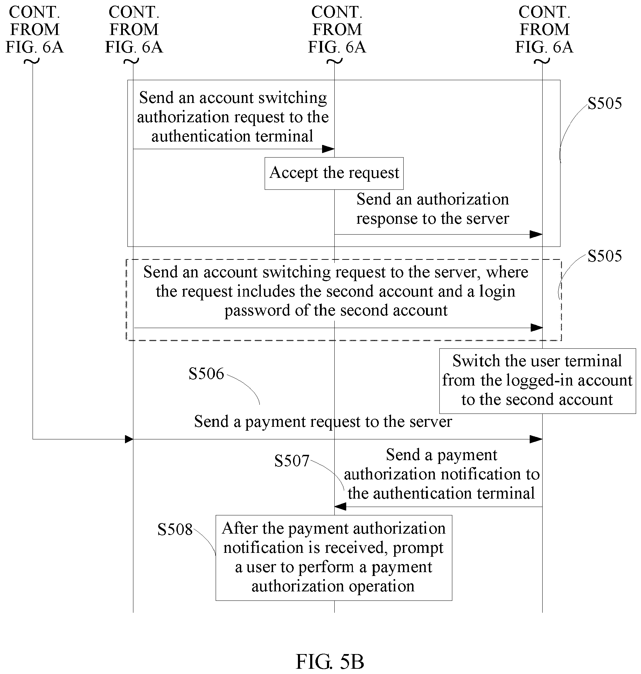

Specific embodiment 1-3: After the server feeds back the result of verification to the user terminal, when the user terminal determines, based on the result of verification, that the logged-in accounts of the two terminals are different, the user terminal requests, directly or by using the authentication terminal, the server to perform account switching. Details are provided in the following method flowchart shown in FIG. 5A and FIG. 5B.

FIG. 3A and FIG. 3B are a method flowchart illustrating that a server performs account verification and a user terminal performs account switching to complete payment according to a specific embodiment of the present invention. As shown in FIG. 3A and FIG. 3B, a user terminal, a target terminal, and a server are included. The target terminal may serve as an authentication terminal, and allows a user to perform, on the authentication terminal, payment authorization (to be specific, a web page payment function is enabled on the user terminal, and user confirmation or user identity authentication is performed on the authentication terminal, to complete payment authorization) for a web page payment action initiated by the user terminal side. In this embodiment of the present invention, it is assumed that a logged-in account of the user terminal is a first account, and a logged-in account of the authentication terminal is a second account.

S301. The user terminal detects the authentication terminal by using a first communication connection, and obtains a terminal identifier corresponding to the authentication terminal.

In this embodiment of the present invention, the user terminal detects at least one target terminal by using the first communication connection, and determines one target terminal as the authentication terminal. Specifically, when detecting one target terminal, the user terminal determines the target terminal as the authentication terminal. When detecting a plurality of target terminals, the user terminal further needs to select, from the plurality of target terminals, one target terminal as the authentication terminal.

It should be noted that this step may be triggered by a user after the user determines to use a web page payment function (for example, the user clicks an Apple Pay button on a web page), or may be triggered by an operation, such as turning on a computer or logging in to a merchant's web page by a user. This is not limited in the present invention.

In this embodiment of the present invention, the first communication connection may be a wireless connection such as Bluetooth, Wi-Fi, or Near Field Communication (NFC, Near Field Communication). In a possible case of the present invention, the user terminal detects a target terminal through Bluetooth, and obtains a terminal identifier of the target terminal through the Bluetooth connection. During implementation, one or more target terminals may be detected through Bluetooth; and if there are a plurality of target terminals, one of the plurality of target terminals may be selected as the authentication terminal. In another possible case of the present invention, the user terminal detects a target terminal through NFC. Usually, one target terminal may be detected through NFC, and in this case, the target terminal may be determined as the authentication terminal. During implementation, after the user selects the web page payment function, the user terminal may prompt, by using a user interface (UI, user interface), the user to determine the authentication terminal in an NFC tapping manner. When the user moves the target terminal near the user terminal, the target terminal is determined as the authentication terminal. The user terminal may read the authentication terminal identifier from the authentication terminal in a read/write mode (Reader/Writer Mode), or may request, in a peer-to-peer mode (P2P mode), the authentication terminal to return the terminal identifier of the authentication terminal.

There may be a plurality of implementations of selecting one of a plurality of target terminals as the authentication terminal. The manners are as follows:
Manner 1: The user terminal may perform selection based on a relative distance between the user terminal and each target terminal. For example, the user terminal determines a relative distance (for example, a relative Bluetooth distance) between the user terminal and each target terminal in a specific manner (for example, based on strength of a Bluetooth signal sent by each target terminal, or based on location coordinates of each target terminal), and determines, as the authentication terminal, a target terminal that is at a shortest relative distance from the user terminal. Certainly, the user terminal may alternatively determine one target terminal as the authentication terminal in another manner (for example, determine the authentication terminal based on conditions such as a frequency of communication between the user terminal and each target terminal, or a frequency of performing payment authorization by each target terminal when the target terminal serves as the authentication terminal). This is not limited in the present invention.

Manner 2: The user terminal filters, based on one or more locally prestored identifiers of terminals bound to the user terminal, a target terminal bound to the user terminal. The user terminal may store, in a whitelist form, the one or more identifiers of terminals bound to the user terminal; or certainly, may determine, based on a blacklist, whether a target terminal is trustworthy (for example, when a terminal identifier of the target terminal in not in the blacklist, the target terminal is considered trustworthy).

If a plurality of target terminals are filtered, (1) the user terminal may prompt the user to select, from the plurality of target terminals, one target terminal as the authentication terminal; use the target terminal selected by the user as the authentication terminal; and send identification information of the second terminal to the server, to request the server to perform the following operation step (such as an account verification operation). Alternatively, (2) the user terminal may directly report filtered terminal identifiers to the server, so that the server performs account verification. If logged-in accounts of all the target terminals are different from the logged-in account of the user terminal, the server prompts, by using the user terminal, the user to perform selection, to determine one target terminal as the authentication terminal. In addition, when logged-in accounts of a plurality of target terminals are the same as the logged-in account of the first terminal, the user terminal may prompt the user to perform selection; or certainly, the server may determine, from the plurality of target terminals, one target terminal as the authentication terminal by itself.

Manner 3: (1) The user terminal directly prompts the user to select one target terminal as the authentication terminal. Alternatively, (2) the user terminal sends a terminal identifier of a detected target terminal to the server, so that the server filters, based on one or more locally prestored identifiers of terminals bound to the user terminal, a target terminal bound to the user terminal, and performs account verification. If logged-in accounts of all the target terminals are different from the logged-in account of the user terminal, the server prompts, by using the user terminal, the user to perform selection, to determine one target terminal as the authentication terminal. In addition, when logged-in accounts of a plurality of target terminals are the same as the logged-in account of the first terminal, the server may prompt, by using the user terminal, the user to perform selection; or certainly, the server may determine, from the plurality of target terminals, one target terminal as the authentication terminal by itself. The server may store, in a whitelist form, the one or more identifiers of terminals bound to the user terminal; or certainly, may determine, based on a blacklist, whether a target terminal is trustworthy (for example, when a terminal identifier of the target terminal in not in the blacklist, the target terminal is considered trustworthy).

There may be a plurality of specific manners of determining one target terminal as the authentication terminal by the server itself. For example, the server determines one account based on any one or more of conditions: an account use frequency, an account priority (user-defined or server-default), and a historical record related to an account (for example, a quantity of completed payment authorizations corresponding to the account, to be specific, a total quantity of payment authorizations completed by terminals that serve as the authentication terminals after logging in to the account), and further determines, as the authentication terminal, a target terminal that has logged in to the account.

In this specific embodiment of the present invention, the terminal identifier of the authentication terminal may be an identifier or a name of hardware in the authentication terminal, for example, a Bluetooth network interface card address or a Bluetooth name (which may be user-defined or may be a factory setting of the terminal), or a name of the authentication terminal such as "MacPro of a user A"), provided that the authentication terminal can be uniquely identified. This is not limited in the present invention.

S302. After obtaining the terminal identifier of the authentication terminal, the user terminal sends a payment request to the server, where the payment request includes the terminal identifier of the authentication terminal.

In this specific embodiment of the present invention, this step may be triggered by the user after the user determines to use the web page payment function (for example, the user clicks an Apple Pay button on a web page).

It should be noted that the payment request may further include the logged-in first account of the user terminal or a terminal identifier of the user terminal, so that the server determines which terminal is the user terminal sending the payment request. Certainly, the payment request may alternatively not include the information, and the server may determine, by using a network connection between the user terminal and the server, which terminal is the user terminal.

In this embodiment of the present invention, a function of the payment request may be requesting the server to authenticate a merchant, for example, perform merchant validation Merchant Validation in an "Apple Pay on the web" procedure, to authenticate validity of the merchant and create a session between the user terminal and the server (that is, an Apple Pay server). This is not limited in the present invention provided that merchant validation can be completed.

S303. After receiving the payment request sent by the user terminal, the server determines a logged-in second account of the authentication terminal based on the terminal identifier of the authentication terminal included in the payment request.

In this embodiment of the present invention, the server may store an association relationship between a terminal identifier of each terminal and a logged-in account of each terminal. Therefore, the server may determine the logged-in second account of the authentication terminal based on the terminal identifier of the authentication terminal.

S304. The server determines whether the first account matches the second account, and if the accounts do not match, performs step S305; otherwise, performs step S307.

In this embodiment of the present invention, a manner of determining, by the server, whether the first account matches the second account may be any one of the following:
the server determines whether the first account and the second account are same accounts, and if the accounts are different, considers that the accounts do not match; otherwise, considers that the accounts match; or
the server determines whether the first account is bound to the second account, and if the accounts are not bound, considers that the accounts do not match; otherwise, considers that the accounts match; or
the server determines whether the first account is bound to and/or the same as the second account, and if the accounts are not the same and are not bound, considers that the accounts do not match; otherwise, considers that the accounts match.

S305. The server sends an account switching notification to the user terminal.

In this embodiment of the present invention, if the first account does not match the second account, the server does not push a payment authorization notification to the authentication terminal, that is, cannot complete payment authorization for a web page payment action on the user terminal. In this case, the server needs to send the account switching notification to the user terminal, so that the user switches the user terminal from the logged-in first account to the second account.

S306. After receiving the account switching notification, the user terminal informs a user that the user terminal needs to be switched from the logged-in first account to the second account; and completes account switching according to a user instruction, that is, switches the user terminal from the logged-in first account to the second account.

In this embodiment of the present invention, the user terminal may display the received account switching notification by using the user interface (UI, interface), to prompt the user to perform an operation.

In an example, an account switching prompt may be, for example, "A logged-in account of the computer is different from that of a nearby mobile phone B (an identifier of the mobile phone B, such as iPhone 6 or Honor 8). Agree to use the logged-in account of the mobile phone B to log in on the computer?", or "An account of the computer can be switched to a logged-in account of a mobile phone B (an identifier of the mobile phone B, such as iPhone 6 or Honor 8), agree or not?".

In this embodiment of the present invention, a specific manner of completing account switching according to a user instruction may be any one of the following:
Manner I: In the present invention, during a process of switching the logged-in account of the user terminal, the user may be prompted to enter a login password of the second account for login, to implement account switching. The user terminal correspondingly enters the password of the second account based on the prompted second account, and sends the second account and the password of the second account to the server, so that the server switches the user terminal from the logged-in first account to the second account (that is, logs out the first account, and logs in again to the second account). For example, after the user enters the login password of the second account on the user terminal (for example, on an opened web page on the user terminal) as prompted, the user terminal adds the login password to a switching confirmation request, and sends the request to the server, so that the server switches the first terminal from the logged-in first account to the second account.

Manner II: In the present invention, during a process of switching the logged-in account of the user terminal, an account switching authorization request may be sent to the authentication terminal, so that the authentication terminal authorizes the server to switch the user terminal from the logged-in first account to the second account. For example, the user is prompted to use the authentication terminal to perform authorization login. After user confirmation is obtained, the user terminal sends the switching authorization request to the authentication terminal, where the switching authorization request carries the terminal identifier of the user terminal, so that the authentication terminal uses the UI to prompt the user to make confirmation or require the user to perform identity authentication (for example, require the user to enter a fingerprint or a PIN), and sends the switching authorization request including the terminal identifier of the user terminal to the server after user confirmation or user identity authentication succeeds. In this case, the server switches the user terminal from the logged-in first account to the second account.

In Manner II, after receiving the account switching authorization request sent by the user terminal, the authentication terminal may prompt, based on the user terminal sending the request, whether to perform authorization for an account switching request of the user terminal. For example, the authentication terminal provides a prompt by using the user interface (UI, user interface), and displays, on the UI of the authentication terminal, "Whether to accept an account switching authorization request sent by a computer A (an identifier of the computer A, such as MacPro or Thinkpad)? To accept the request, enter a fingerprint; to reject the request, back to the previous page". Certainly, there may be other implementations. This is not limited in the present invention.

In this specific embodiment of the present invention, identity authentication performed on the authentication terminal may be implemented by using any of a plurality of manners such as entering a fingerprint or a personal identification number (PIN, personal identification number) by the user or performing iris identification. This is not limited in the present invention.

S307. After performing authentication for this transaction, the server pushes a payment authorization notification to the authentication terminal.

In this embodiment of the present invention, when determining that the logged-in account of the user terminal matches the logged-in account of the authentication terminal (for example, the accounts are the same) (to be specific, when directly determining that the first account matches the second account in step S304, or when determining that the first account does not match the second account in step S304 but determining that the user terminal has been switched from the logged-in first account to the second account in step 306), the server sends the payment authorization notification to the authentication terminal. The payment authorization notification may include payment related information, including some or all of information such as a payment amount, a payee, a payer, a payment reason, or a commodity list for this transaction.

It should be noted that the performing authentication by the server for this transaction may be performing a merchant validation Merchant Validation operation in the foregoing "Apple Pay on the web" technical procedure. Certainly, this is not limited in the present invention, provided that merchant validity can be authenticated, and a session identifier required for subsequent transaction can be allocated to a merchant when the authentication succeeds. A merchant validation operation is used as an example for description. The server authenticates merchant validity by performing the merchant validation operation; and if the authentication succeeds, allocates a session identifier required for subsequent transaction to a merchant, to determine an authentication terminal, and sends, to the authentication terminal, a payment authorization notification used to request the authentication terminal to perform payment authorization.

S308. The authentication terminal performs payment authorization for this payment (such as web page payment), to complete payment.

For example, after receiving the payment authorization notification, the authentication terminal prompts (by using the UI to display information related to this transaction, such as a payment amount, a commodity, and a card number of a payer) the user to perform identity authentication (for example, enter a fingerprint or a PIN). After user identity authentication succeeds (for example, fingerprint identification succeeds or the correct PIN is entered), authorization for this payment can be completed. The completing authorization for this payment may be understood as obtaining approval or authorization for this payment action from the user. Correspondingly, actions of the authentication terminal are: performing user identity authentication, generating a transaction credential after authentication succeeds, and submitting the transaction credential (for example, by sending a payment authorization confirmation message) to the server for processing. Processing performed by the server may include interaction and processing between a plurality of server entities, for example, an Apple Pay server uses a merchant's public key to encrypt information such as the transaction credential (for example, the information includes a consignee's address, contact information, and other data), and then forwards the encrypted information to a merchant server merchant server, so that the merchant server decrypts the encrypted information, and then forwards the transaction credential in the decrypted information to a transaction credential-related server (such as a bank server or a dedicated transaction credential server) for processing and fund settlement.

In this embodiment of the present invention, step S301 of "selecting, from a plurality of target terminals, one target terminal as the authentication terminal" includes an implementation of sending a plurality of terminal identifiers to the server, such as (2) in the foregoing Manner 2 and (2) in the foregoing Manner 3, and may be integrated in steps S302 to S306, or certainly, may be completed directly before step S302.

Using an implementation similar to (2) in the foregoing Manner 3 as an example for description, if S301 needs to be integrated in steps S302 to S306, details are as follows: In step S302, the payment request carries identifiers of a plurality of target terminals. In steps S303 and S304, after filtering, from all target terminals, at least one target terminal having a binding relationship with the user terminal, if the server finds that all of logged-in accounts of the filtered target terminals are different from the first account, the server informs, in step S305, the user terminal of the filtered target terminals by using an account switching notification, so that the user selects one from these target terminals. In step S306, the user terminal may present a selection list to the user by using the UI, so that the user can easily select one from these target terminals. For example, "Please select an account to be switched to: an account of A and an account of B" is displayed. For another example, "Please select one of the following mobile terminals as a payment authorization terminal: a mobile phone of A and a watch of B" is displayed (note: the account of A has been logged in on the mobile phone of A, and the account of B has been logged in on the watch of B). After selecting one account or one mobile terminal, the user can perform an account switching operation according to Manner I or Manner II in S306. Certainly, in step S304, after determining that all the logged-in accounts of the filtered target terminals are different from the first account, the server may alternatively select, from the filtered target terminals, one target terminal as the authentication terminal by itself. In this way, steps S305 and S306 are not required to prompt the user to perform selection. In other words, only one target terminal is provided by the server for the user terminal, and the user is directly prompted to perform account switching.

FIG. 4 is a method flowchart illustrating that a server performs account verification and an authentication terminal performs account switching to complete payment according to a specific embodiment of the present invention. As shown in FIG. 4, a user terminal, a target terminal, and a server are included. The target terminal may serve as an authentication terminal, and allows a user to perform, on the authentication terminal, payment authorization (to be specific, a web page payment function is enabled on the user terminal, and user confirmation or user identity authentication is performed on the authentication terminal, to complete payment authorization) for a web page payment action initiated by the user terminal side.

Steps S401 to S403 are the same as steps S301 to S303 in the specific embodiment 1-1 shown in FIG. 3A and FIG. 3B. To be specific, the user terminal obtains a terminal identifier of the authentication terminal, and sends the terminal identifier to the server, so that the server determines, based on the terminal identifier, a logged-in second account of the authentication terminal, and further, performs determining in the following step S404 for this transaction, that is, determines whether a logged-in account of the user terminal matches the logged-in account of the authentication terminal.

S404. The server determines whether the first account matches the second account, and if the accounts do not match, performs step S405; otherwise, performs step S407.

In this embodiment of the present invention, a manner of determining, by the server, whether the first account matches the second account is the same as that in step S304 in the embodiment shown in FIG. 3A and FIG. 3B. Details are not described herein again.

S405. The server sends an account switching authorization request to the authentication terminal, where the account switching authorization request includes at least a terminal identifier of the user terminal (such as a terminal name), to request the authentication terminal to authorize the server to switch the user terminal from the logged-in first account to the second account.

It should be noted that before step S405, the server may further send an account switching notification to the user terminal, to request the user to make confirmation (for example, provide a prompt by using a UI of the user terminal; for a specific prompt manner, reference may be made to the foregoing embodiment, and details are not described herein again); and perform step S405 after obtaining user confirmation.

In this embodiment of the present invention, if the first account does not match the second account, the server does not push a payment authorization notification to the authentication terminal, that is, cannot complete payment authorization for a web page payment action on the user terminal. In this case, the server sends the account switching authorization request to the authentication terminal, to request the authentication terminal to authorize the server to switch the user terminal from the logged-in first account to the second account. The account switching authorization request may include the terminal identifier of the user terminal, or other equivalent information that can represent the user terminal, for example, the logged-in first account of the user terminal. Certainly, the account switching authorization request may further include information such as the terminal identifier of the authentication terminal.

S406. After receiving the account switching authorization request, the authentication terminal uses a UI to prompt a user to make confirmation or require the user to perform identity authentication (for example, require the user to enter a fingerprint or a PIN), and sends a switching authorization response to the server after the confirmation or authentication succeeds, so that the server switches the user terminal from the logged-in first account to the second account.

For example, the authentication terminal provides a prompt by using the user interface (UI, user interface), to require the user to make confirmation or identity authentication. For example, the authentication terminal displays "Whether to authorize to switch a computer A (for example, MacPro or Thinkpad of A) from a first account to a second account?" If yes, the authentication terminal requires the user to enter a fingerprint for authentication; if no, rejects authorization. Herein, after the user selects "yes", identity authentication is performed. This can improve security, and prevent a mobile phone or a watch of the user from serving as the authentication terminal for payment authorization after being stolen. Certainly, user confirmation may alternatively be considered completed after the user selects "yes", and no further identity authentication needs to be performed.

In this specific embodiment of the present invention, identity authentication may be implemented by using any of a plurality of manners such as entering a fingerprint or a personal identification number (PIN, personal identification number) by the user or performing iris identification. This is not limited in the present invention.

In this embodiment of the present invention, if the user completes user confirmation or user identity authentication on the authentication terminal, the authentication terminal sends the switching authorization response to the server, where the switching authorization response may include authorization approval information or identity authentication success information. In this case, the server considers that approval or authorization of an authentication terminal owner has been obtained, and further performs account switching (that is, switches the user terminal from the logged-in first account to the second account). Steps S407 and S408 are the same as steps S307 and S308 in the specific embodiment 1-1 shown in FIG. 3A and FIG. 3B. To be specific, after it is ensured that the logged-in account of the user terminal matches the logged-in account of the authentication terminal, a payment authorization notification is pushed to the authentication terminal, so that the authentication terminal completes a payment authorization procedure in this web page payment action.

FIG. 5A and FIG. 5B are a method flowchart illustrating that a user terminal obtains a result of verification and a server or an authentication terminal performs account switching to complete payment according to a specific embodiment of the present invention. As shown in FIG. 5A and FIG. 5B, a user terminal, a target terminal, and a server are included. The target terminal may serve as an authentication terminal, and allows a user to perform, on the authentication terminal, payment authorization (to be specific, a web page payment function is enabled on the user terminal, and user confirmation or user identity authentication is performed on the authentication terminal, to complete payment authorization) for a web page payment action initiated by the user terminal side. In this embodiment of the present invention, it is assumed that a logged-in account of the user terminal is a first account, and a logged-in account of the authentication terminal is a second account.

S501 is the same as step S301 in the embodiment 1-1 shown in FIG. 3A and FIG. 3B. To be specific, the user terminal detects the authentication terminal and obtains a terminal identifier of the authentication terminal. A specific implementation of this step is not described herein.

S502. The user terminal sends an account verification request to the server, where the account verification request includes the terminal identifier of the authentication terminal and is used to request the server to verify logged-in accounts of the two terminals.

In this specific embodiment of the present invention, the account verification request may further include a logged-in first account of the user terminal or a terminal identifier of the user terminal, so that the server determines the first account.

S503. After receiving the account verification request, the server determines a logged-in second account of the second terminal based on the terminal identifier of the authentication terminal, verifies the second account with a logged-in first account of the user terminal, and sends a result of verification to the user terminal.

In this embodiment of the present invention, the performing an account verification operation by the server is specifically: determining whether the logged-in first account of the user terminal matches the logged-in second account of the authentication terminal. A specific manner of determining whether the two accounts match is similar to the manner described in step S304 in the embodiment 1-1 shown in FIG. 3A and FIG. 3B. Details are not described herein again.

In addition, it should be noted that the account verification request in this embodiment is different from the payment request in the embodiment 1-1 shown in FIG. 3A and FIG. 3B. In this embodiment of the present invention, the user terminal needs to send a payment request to the server only after determining that the logged-in account of the user terminal matches that of the authentication terminal (that is, the accounts match: the accounts are the same, or the accounts are different but are bound to each other), to request the server to perform authentication (such as the foregoing merchant validation operation) for this transaction. Details are described in the following step S50x.

S504. The user terminal determines, based on the result of verification, whether the first account matches the second account, and if the accounts do not match, performs step S505; otherwise, performs step S506.

In this embodiment of the present invention, if the result of verification is that the first account does not match the second account, the server does not push a payment authorization notification to the authentication terminal, that is, cannot complete payment authorization for a web page payment action on the user terminal. In this case, the user terminal needs to trigger account switching. For example, (after obtaining user confirmation), the user terminal sends an account switching request to the server, so that the server switches the user terminal from the logged-in first account to the second account.

S505. The user terminal informs a user that the user terminal needs to be switched from the logged-in first account to the second account; and completes account switching according to a user instruction, that is, switches the user terminal from the logged-in first account to the second account.

In this embodiment of the present invention, there are a plurality of specific manners in which the user terminal prompts a user and completes account switching according to a user instruction. The specific manners are similar to the manner described in step S306 in the embodiment 1-1 shown in FIG. 3A and FIG. 3B. Details are not described herein again.

In this embodiment of the present invention, based on the manner in the embodiment 1-1, after receiving the account switching request (including information such as the second account and a password of the second account) sent by the user terminal or an account switching authorization notification (including authorization information and information indicating that user identity authentication succeeds) sent by the authentication terminal, the server switches the user terminal from the logged-in first account to the second account.

S506. When determining that the logged-in account of the user terminal matches the logged-in account of the authentication terminal, the user terminal sends a payment request to the server, to request the server to perform authentication for this transaction.

In this embodiment of the present invention, when determining that the logged-in account of the user terminal matches the logged-in account of the authentication terminal (to be specific, when directly determining that the first account matches the second account in step S504, or when determining that the first account does not match the second account in step S504 but determining that the user terminal has been switched from the logged-in first account to the second account in step 505), the user terminal sends the payment request to the server. In this embodiment of the present invention, a function of the payment request is the same as that in step S302 in the embodiment 1-1 shown in FIG. 3A and FIG. 3B, that is, requesting the server to authenticate a merchant. Details are not described herein again.

S507 and S508 are the same as steps S307 and S308 in the embodiment 1-1 shown in FIG. 3A and FIG. 3B. To be specific, after performing authentication for this transaction, the server pushes a payment authorization notification to the authentication terminal, so that the authentication terminal completes a payment authorization procedure in this web page payment action. Details are not described herein again.

Different from concepts of the embodiments described in FIG. 3A and FIG. 3B to FIG. 5A and FIG. 5B, an embodiment of the present invention may further provide another solution. A specific procedure is as follows:
1. When the user terminal and one or more target terminals are within a communication range (for example, a Bluetooth communication range), both the user terminal and the target terminal send a request to the server, so that the server verifies logged-in accounts of these terminals.
2. If these accounts match, the server separately delivers a notification to these terminals, to allow payment authorization to be transferred from the user terminal to the authentication terminal.
   a. When there is one target terminal, the user terminal directly determines the target terminal as the authentication terminal.
   b. When there are a plurality of target terminals, (1) after receiving the notification, the user terminal may use a UI to prompt the user to select and determine, from the plurality of target terminals, one target terminal as the authentication terminal; or the user terminal may determine, from the plurality of target terminals, one target terminal as the authentication terminal based on a locally stored identifier of a terminal bound to the user terminal; or the user terminal may determine a target terminal nearest to the user terminal as the authentication terminal based on a relative distance between each target terminal and the user terminal. Alternatively, (2) the server may determine, from the plurality of target terminals, one target terminal as the authentication terminal based on a locally stored identifier of a terminal bound to the user terminal, and inform the user terminal of a determining result. (Herein, a manner of "determining one target terminal from a plurality of target terminals" is similar to that described in the foregoing embodiment).

   After determining the authentication terminal, the user terminal directly performs step 4 to perform a subsequent procedure.
3. If these accounts do not match, the server sends an account switching notification to the user terminal, or the server sends the result of verification to the user terminal, to allow payment authorization to be transferred from the user terminal to the authentication terminal after account switching is performed.
   a. When there is one target terminal, the user terminal determines the target terminal as the authentication terminal, and may request (directly or by using the authentication terminal) the server to perform switching to the second account. Specific steps are similar to the account switching processes in the embodiment 1-1 to the embodiment 1-3 respectively described in FIG. 3A and FIG. 3B to FIG. 5A and FIG. 5B.
   b. When there are a plurality of target terminals, (1) after receiving the account switching notification or the result of verification from the server, the user terminal may use a UI to prompt the user to select, from the plurality of target terminals, one target terminal as the authentication terminal; or the user terminal may determine, from the plurality of target terminals, one target terminal as the authentication terminal based on a locally stored identifier of a terminal bound to the user terminal; or the user terminal may determine a target terminal nearest to the user terminal as the authentication terminal based on a relative distance between each target terminal and the user terminal. Alternatively, (2) the server may determine, from the plurality of target terminals, one target terminal as the authentication terminal based on a locally stored identifier of a terminal bound to the user terminal, and inform the user terminal of the authentication terminal by using the account switching notification. (Herein, a manner of "determining one target terminal from a plurality of target terminals" is similar to that described in the foregoing embodiment).

   After determining the authentication terminal, the user terminal requests the server to switch the user terminal from the logged-in first account to the second account. Specific steps are similar to the account switching processes in the embodiment 1-1 to the embodiment 1-3 respectively described in FIG. 3A and FIG. 3B to FIG. 5A and FIG. 5B.
4. After it is determined that the accounts match in step 2 or after account switching is performed in step 3, the user terminal sends the payment request to the server, so that the server performs an authentication (such as a merchant validation operation) and payment authorization process for this transaction. Specific operations are the same as those described in the embodiment 1-1 to the embodiment 1-3. Details are not described herein again.

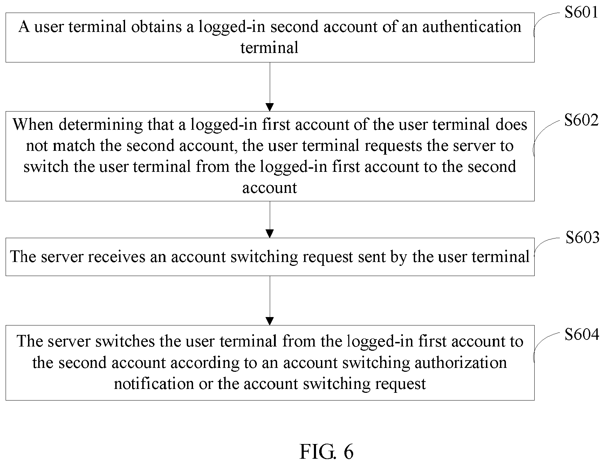

The foregoing describes the three different specific embodiments in the first example with reference to FIG. 3A and FIG. 3B to FIG. 5A and FIG. 5B. The following describes different specific embodiments in a second example with reference to the second example shown in FIG. 6, and FIG. 7A and FIG. 7B to FIG. 9A and FIG. 9B.

In the second example, after obtaining the logged-in second account of the second terminal, the first terminal locally performs verification. A manner of obtaining the second account and operations to be performed after the verification may be described in the following three specific embodiments.

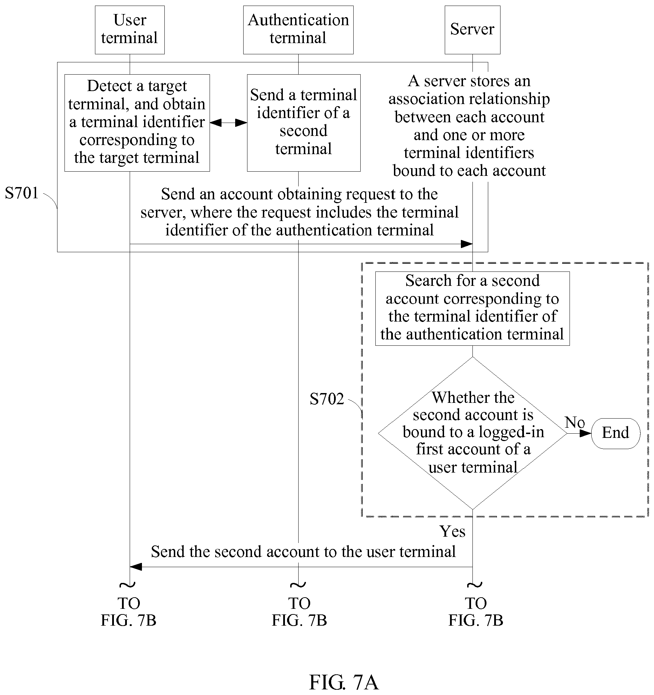

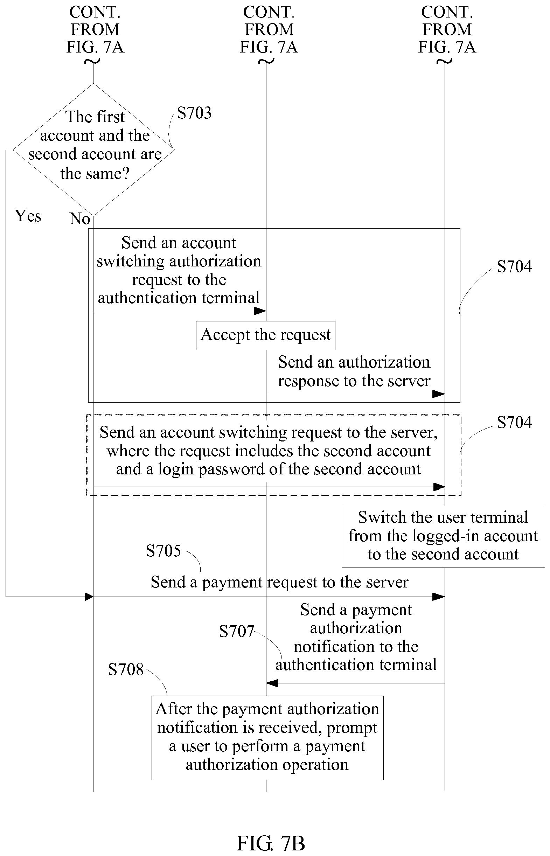

Embodiment 2-1: After obtaining the authentication terminal identifier, the user terminal directly requests the corresponding second account from the server, and the server determines, based on a prestored binding relationship, whether to feed back the second account to the user terminal. If the second account is fed back, the user terminal verifies the first account with the second account; and if the result of verification is that the accounts are different, the user terminal may prompt the user to perform account switching. Details are provided in the following method flowchart shown in FIG. 7A and FIG. 7B.

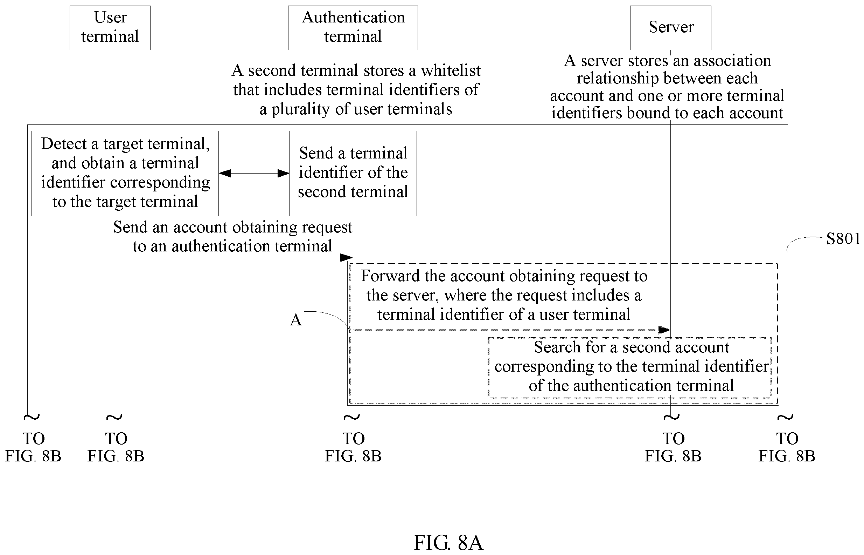

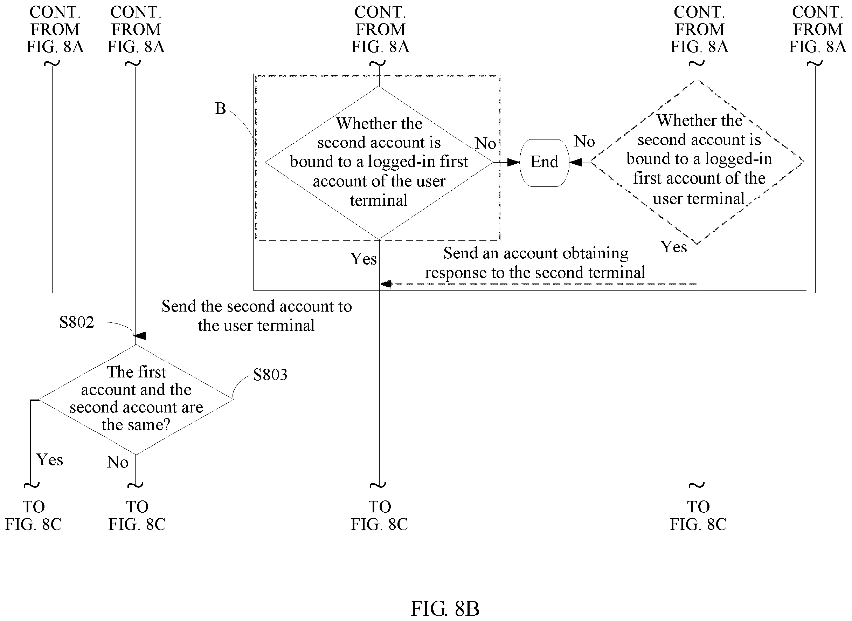

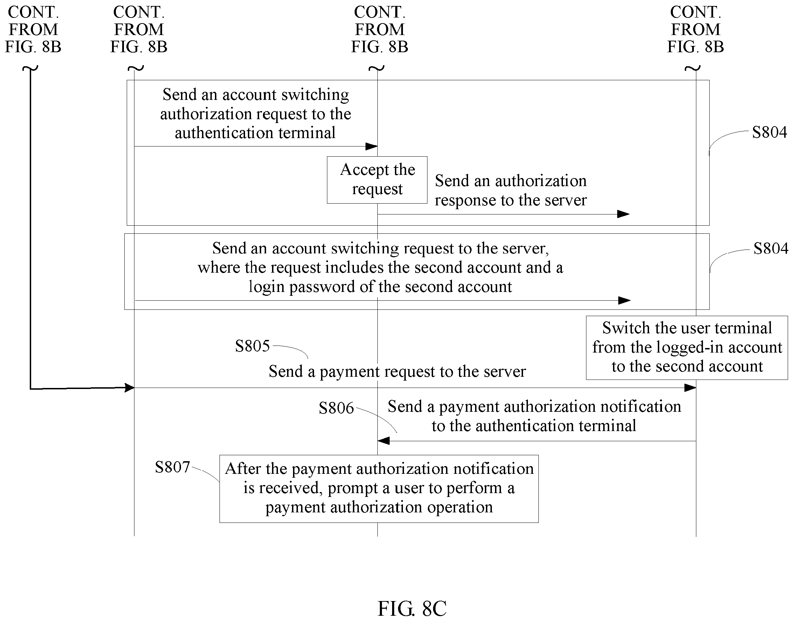

Embodiment 2-2: A difference from the embodiment 2-1 lies in a manner of obtaining the second account by the user terminal. In this solution, the user terminal requests, from the authentication terminal, the logged-in second account of the authentication terminal, and the authentication terminal determines, based on a preset whitelist, whether to feed back the second account to the user terminal; or the authentication terminal requests the server to determine, based on a binding relationship prestored on the server side, whether to feed back the second account to the user terminal. Details are provided in the following method flowchart shown in FIG. 8A, FIG. 8B and FIG. 8C.

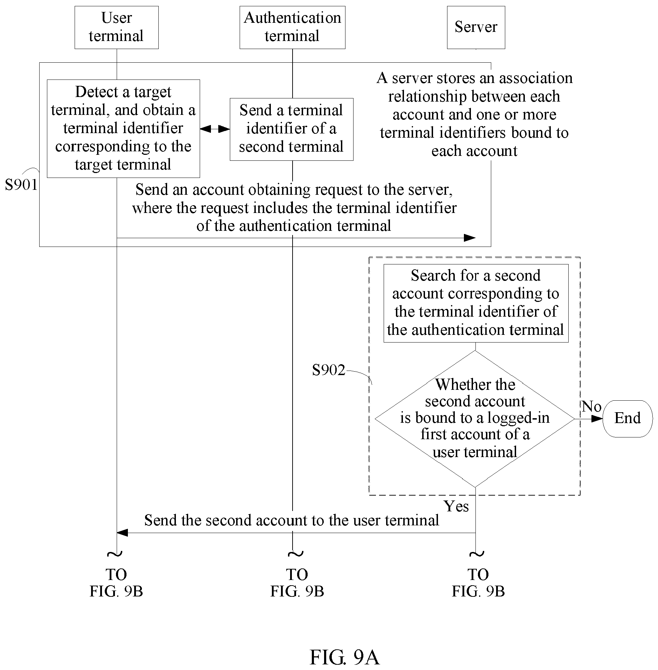

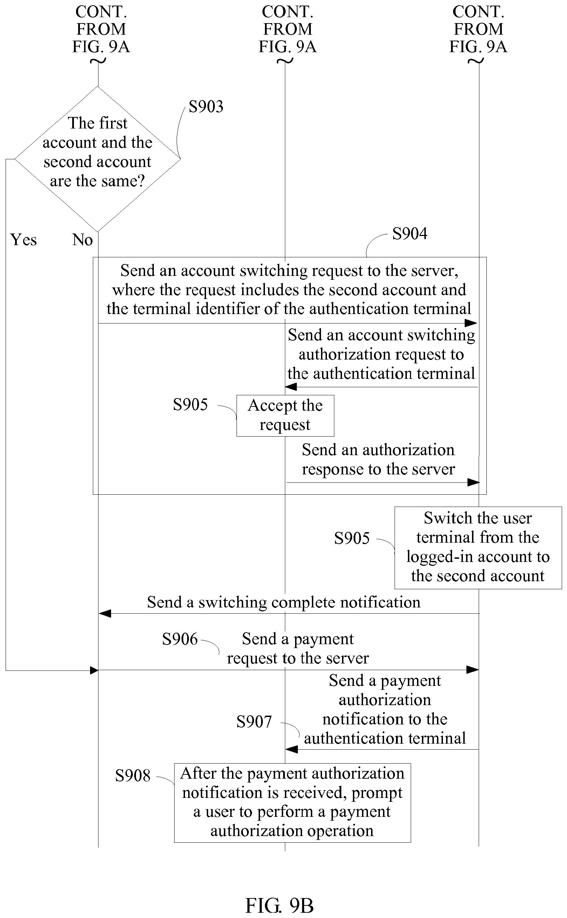

Embodiment 1-3: A difference from the embodiment 2-1 and the embodiment 2-2 lies in an account switching manner. In this solution, the user terminal directly requests the server to complete account switching with the help of the authentication terminal, and (after determining that the first account is bound to the second account), the server requests account switching authorization from the authentication terminal. The server can perform account switching only after obtaining authorization of the authentication terminal. Details are provided in the following method flowchart shown in FIG. 9A and FIG. 9B.

FIG. 6 is a method flowchart illustrating that a user terminal performs account verification and performs account switching to complete payment according to a specific embodiment of the present invention. As shown in FIG. 6, the method includes the following steps.

S601. A user terminal obtains a logged-in second account of an authentication terminal.

After detecting the authentication terminal, the user terminal sends an account obtaining request to a server, to request to obtain the logged-in second account of the authentication terminal.

In this embodiment of the present invention, a manner of detecting the authentication terminal by the user terminal is: detecting at least one target terminal by using a first communication connection, and determining one target terminal as the authentication terminal. Specifically, when detecting one target terminal, the user terminal determines the target terminal as the authentication terminal. When detecting a plurality of target terminals, the user terminal further needs to select, from the plurality of target terminals, one target terminal as the authentication terminal. A specific implementation for a case in which a plurality of target terminals are detected is similar to that described in step S301 in the embodiment 1-1 shown in FIG. 3A and FIG. 3B. Details are not described herein again.

It should be noted that this step may be triggered by a user after the user determines to use a web page payment function (for example, the user clicks an Apple Pay button on a web page), or may be triggered by an operation, such as turning on a computer or logging in to a merchant's web page by a user. This is not limited in the present invention. In this embodiment of the present invention, the requesting, by the user terminal, to obtain the logged-in second account of the authentication terminal is specifically: sending the account obtaining request to the server, where the account obtaining request includes a terminal identifier of the authentication terminal and is used to request the server to feed back the logged-in second account of the authentication terminal.

It should be noted that for a case in which the user terminal detects a plurality of target terminals, a possible implementation is: Before sending the account obtaining request, the user terminal may determine, locally or by using the server, one target terminal as the authentication terminal in the manner described in step 301 in the embodiment 1-1 shown in FIG. 3A and FIG. 3B; and send, to the server, the account obtaining request used to obtain the logged-in second account of the authentication terminal. A manner of determining one target terminal from a plurality of target terminals by the server is as follows:
In one aspect, after detecting a plurality of target terminals, the user terminal sends an authentication terminal selection request to the server. The authentication terminal selection request includes a terminal identifier of each of the plurality of target terminals. The server determines, from the plurality of target terminals based on the authentication terminal selection request, at least one target terminal that has an association relationship with the user terminal. The server sends, to the user terminal, the at least one available target terminal that has an association relationship with the user terminal, and determines one of the at least one available target terminal as the authentication terminal.

In another aspect, after detecting a plurality of target terminals, the user terminal sends an authentication terminal selection request to the server. The authentication terminal selection request includes a terminal identifier of at least one available target terminal that has an association relationship with the user terminal and that is determined from the plurality of target terminals. The server selects one of the at least one available target terminal as the authentication terminal.

In this specific embodiment of the present invention, the association relationship includes that a terminal identifier of the user terminal is bound to the terminal identifier of the at least one available target terminal, or the terminal identifier of the at least one available target terminal is in a whitelist of the user terminal.

Certainly, there is another possible implementation: The user terminal may add terminal identifiers of a plurality of target terminals (for example, all target terminals detected this time, or some target terminals that are filtered from all target terminals detected this time) to the account obtaining request, to request the server to determine, from the plurality of target terminals, one target terminal as the authentication terminal. In this case, the authentication terminal selection request may be the account obtaining request. When determining the authentication terminal, the server also returns the logged-in second account of the authentication terminal to the user terminal. A manner of determining one target terminal from a plurality of target terminals is the same as that described above. Details are not described herein again.

After receiving the account obtaining request, the server determines whether the authentication terminal is bound to the user terminal, and if the terminals are bound, sends the second account to the user terminal; otherwise, ends the procedure.

In this embodiment, the determining, by the server, whether the authentication terminal is bound to the user terminal may be specifically: determining whether the terminal identifier of the authentication terminal included in the account obtaining request is bound to the terminal identifier of the user terminal, or determining whether the logged-in second account of the authentication terminal is bound to a logged-in first account of the user terminal, or the like. This is not limited herein.

It should be noted that the server side prestores a list of terminal identifiers bound to the user terminal, a list of accounts bound to the logged-in first account of the user terminal, or the like. In other words, the user needs to perform manual binding by using a computer or a mobile phone. For example, after logging in to an account server (such as an Apple ID server) by using the computer, the user may set, on a login page, an option for binding another account. In this way, the user may enter another account on the login page, to bind the another account to the first account.

Certainly, when setting a binding option, the user may further add binding relationships in other dimensions, such as a terminal identifier, a terminal location, and a usage time. The following provides descriptions by using examples.

Example 1: The terminal identifier of the authentication terminal and the second account are bound to the first account in advance. When the user uses a web page payment function on the user terminal on which the first account has been logged in, the server needs to determine whether both the terminal identifier reported by the user terminal and the logged-in account of the terminal indicated by the terminal identifier are bound to the first account. If both the terminal identifier and the account are bound to the first account, the server sends the second account to the user terminal; otherwise, the server does not send the second account.

Example 2: The terminal identifier of the authentication terminal and the second account are bound to the first account in advance, and a use location of the authentication terminal when the authentication terminal participates in a payment authorization procedure in a web page payment action is further limited to a preset location (for example, at home). When the user uses a web page payment function on the user terminal on which the first account has been logged in, in addition to determining whether the foregoing condition is satisfied, the server needs to determine whether a current location of the terminal corresponding to the terminal identifier reported by the user terminal is the preset location. If both the two conditions are satisfied, the server sends the second account to the user terminal; otherwise, the server does not send the second account.

S602. When determining that a logged-in first account of the user terminal does not match the second account, the user terminal requests the server to switch the user terminal from the logged-in first account to the second account.

After obtaining the second account, the user terminal determines whether the first account matches the second account, and if the accounts do not match, completes payment through authorization by the authentication terminal; otherwise, the user terminal requests the server to switch the user terminal from the logged-in first account to the second account.

In this embodiment of the present invention, a manner of determining, by the user terminal, whether the first account matches the second account is similar to the manner of determining, by the server, whether the first account matches the second account described in step S304 in the embodiment 1-1 shown in FIG. 3A and FIG. 3B. Details are not described herein again.

S603. The server receives an account switching request sent by the user terminal, where the account switching request includes a terminal identifier of the authentication terminal or the logged-in second account of the authentication terminal.

The account switching request is used to: instruct the server to request the authentication terminal to authorize the server to switch the user terminal from the logged-in first account to the logged-in second account of the authentication terminal, or instruct the server to switch the user terminal from the logged-in first account to the second account. Alternatively, the server receives an account switching authorization notification sent by the authentication terminal, where the account switching authorization notification includes the terminal identifier of the user terminal, and the account switching authorization notification is used to instruct the server to switch the user terminal from the logged-in first account to the logged-in second account of the authentication terminal.

S604. The client switches the user terminal from the logged-in first account to the second account according to the account switching authorization notification or the account switching request, to complete payment authorization for this payment transaction by using the authentication terminal.

Same as steps S505 to S508 in the embodiment 1-3 shown in FIG. 5A and FIG. 5B, the user terminal requests, according to a user instruction, the server to switch the user terminal from the logged-in first account to the second account. When determining that the logged-in accounts of the two terminals are consistent, the user terminal sends a payment request to the server, so that the server completes a payment authorization procedure in this web page payment action by using the authentication terminal. Details are not described herein again.

To describe the method in FIG. 6 in more detail, the following provides descriptions by using three specific examples.

FIG. 7A and FIG. 7B are a method flowchart illustrating that a user terminal obtains, by using a server, a logged-in account of an authentication terminal and performs account verification and the server or the authentication terminal performs account switching to complete payment according to a specific embodiment of the present invention. As shown in FIG. 7A and FIG. 7B, the method includes the following steps.

S701. After detecting an authentication terminal, a user terminal sends an account obtaining request to a server, to request to obtain a logged-in second account of the authentication terminal.

In this embodiment of the present invention, a manner of detecting the authentication terminal by the user terminal is: detecting at least one target terminal by using a first communication connection, and determining one target terminal as the authentication terminal. Specifically, when detecting one target terminal, the user terminal determines the target terminal as the authentication terminal. When detecting a plurality of target terminals, the user terminal further needs to select, from the plurality of target terminals, one target terminal as the authentication terminal. A specific implementation for a case in which a plurality of target terminals are detected is similar to that described in step S301 in the embodiment 1-1 shown in FIG. 3A and FIG. 3B. Details are not described herein again.

It should be noted that this step may be triggered by a user after the user determines to use a web page payment function (for example, the user clicks an Apple Pay button on a web page), or may be triggered by an operation, such as turning on a computer or logging in to a merchant's web page by a user. This is not limited in the present invention. In this embodiment of the present invention, the requesting, by the user terminal, to obtain the logged-in second account of the authentication terminal is specifically: sending the account obtaining request to the server, where the account obtaining request includes a terminal identifier of the authentication terminal and is used to request the server to feed back the logged-in second account of the authentication terminal.

It should be noted that for a case in which the user terminal detects a plurality of target terminals, a possible implementation is: Before sending the account obtaining request, the user terminal may determine, locally or by using the server, one target terminal as the authentication terminal in the manner described in step 301 in the embodiment 1-1 shown in FIG. 3A and FIG. 3B; and send, to the server, the account obtaining request used to obtain the logged-in second account of the authentication terminal. A manner of determining one target terminal from a plurality of target terminals by the server is as follows:
In one aspect, after detecting a plurality of target terminals, the user terminal sends an authentication terminal selection request to the server. The authentication terminal selection request includes a terminal identifier of each of the plurality of target terminals. The server determines, from the plurality of target terminals based on the authentication terminal selection request, at least one target terminal that has an association relationship with the user terminal. The server sends, to the user terminal, the at least one available target terminal that has an association relationship with the user terminal, and determines one of the at least one available target terminal as the authentication terminal.

In another aspect, after detecting a plurality of target terminals, the user terminal sends an authentication terminal selection request to the server. The authentication terminal selection request includes a terminal identifier of at least one available target terminal that has an association relationship with the user terminal and that is determined from the plurality of target terminals. The server selects one of the at least one available target terminal as the authentication terminal.

In this specific embodiment of the present invention, the association relationship includes that a terminal identifier of the user terminal is bound to the terminal identifier of the at least one available target terminal, or the terminal identifier of the at least one available target terminal is in a whitelist of the user terminal.

Certainly, there is another possible implementation: The user terminal may add terminal identifiers of a plurality of target terminals (for example, all target terminals detected this time, or some target terminals that are filtered from all target terminals detected this time) to the account obtaining request, to request the server to determine, from the plurality of target terminals, one target terminal as the authentication terminal. In this case, the authentication terminal selection request may be the account obtaining request. When determining the authentication terminal, the server also returns the logged-in second account of the authentication terminal to the user terminal. A manner of determining one target terminal from a plurality of target terminals is the same as that described above. Details are not described herein again.

S702. After receiving the account obtaining request, the server determines whether the authentication terminal is bound to the user terminal, and if the terminals are bound, sends the second account to the user terminal; otherwise, ends the procedure.

In this embodiment, the determining, by the server, whether the authentication terminal is bound to the user terminal may be specifically: determining whether the terminal identifier of the authentication terminal included in the account obtaining request is bound to the terminal identifier of the user terminal, or determining whether the logged-in second account of the authentication terminal is bound to a logged-in first account of the user terminal, or the like. This is not limited herein.

It should be noted that the server side prestores a list of terminal identifiers bound to the user terminal, a list of accounts bound to the logged-in first account of the user terminal, or the like. In other words, the user needs to perform manual binding by using a computer or a mobile phone. For example, after logging in to an account server (such as an Apple ID server) by using the computer, the user may set, on a login page, an option for binding another account. In this way, the user may enter another account on the login page, to bind the another account to the first account.

Certainly, when setting a binding option, the user may further add binding relationships in other dimensions, such as a terminal identifier, a terminal location, and a usage time. The following provides descriptions by using examples.

Example 1: The terminal identifier of the authentication terminal and the second account are bound to the first account in advance. When the user uses a web page payment function on the user terminal on which the first account has been logged in, the server needs to determine whether both the terminal identifier reported by the user terminal and the logged-in account of the terminal indicated by the terminal identifier are bound to the first account. If both the terminal identifier and the account are bound to the first account, the server sends the second account to the user terminal; otherwise, the server does not send the second account.

Example 2: The terminal identifier of the authentication terminal and the second account are bound to the first account in advance, and a use location of the authentication terminal when the authentication terminal participates in a payment authorization procedure in a web page payment action is further limited to a preset location (for example, at home). When the user uses a web page payment function on the user terminal on which the first account has been logged in, in addition to determining whether the foregoing condition is satisfied, the server needs to determine whether a current location of the terminal corresponding to the terminal identifier reported by the user terminal is the preset location. If both the two conditions are satisfied, the server sends the second account to the user terminal; otherwise, the server does not send the second account.

S703. After obtaining the second account, the user terminal determines whether the first account matches the second account, and if the accounts do not match, performs step S704; otherwise, performs step S705.

In this embodiment of the present invention, a manner of determining, by the user terminal, whether the first account matches the second account is similar to the manner of determining, by the server, whether the first account matches the second account described in step S304 in the embodiment 1-1 shown in FIG. 3A and FIG. 3B. Details are not described herein again.

S704 is the same as step S505 in the embodiment 1-3 shown in FIG. 5A and FIG. 5B: The user terminal requests, according to a user instruction, the server to switch the user terminal from the logged-in first account to the second account. Details are not described herein again.

S705 to S707 are the same as steps S506 to S508 in the embodiment 1-3 shown in FIG. 5A and FIG. 5B: When determining that the logged-in accounts of the two terminals are consistent, the user terminal sends a payment request to the server, so that the server completes a payment authorization procedure in this web page payment action by using the authentication terminal. Details are not described herein again.

FIG. 8A, FIG. 8B and FIG. 8C are a method flowchart illustrating that a user terminal obtains, by using an authentication terminal, a logged-in account of the authentication terminal and performs account verification and a server or the authentication terminal performs account switching to complete payment according to a specific embodiment of the present invention. As shown in FIG. 8A, FIG. 8B and FIG. 8C, the method specifically includes the following steps.

S801. After detecting an authentication terminal, a user terminal sends an account obtaining request to the authentication terminal, to request to obtain a logged-in second account of the authentication terminal.

In this embodiment of the present invention, a manner of detecting the authentication terminal by the user terminal is: detecting at least one target terminal by using a first communication connection, and determining one target terminal as the authentication terminal. Specifically, when detecting one target terminal, the user terminal determines the target terminal as the authentication terminal. When detecting a plurality of target terminals, the user terminal further needs to select, from the plurality of target terminals, one target terminal as the authentication terminal. A specific implementation for a case in which a plurality of target terminals are detected is similar to that described in step S301 in the embodiment 1-1 shown in FIG. 3A and FIG. 3B. Details are not described herein again.

It should be noted that this step may be triggered by a user after the user determines to use a web page payment function (for example, the user clicks an Apple Pay button on a web page), or may be triggered by an operation, such as turning on a computer or logging in to a merchant's web page by a user. This is not limited in the present invention.

In this embodiment of the present invention, the requesting, by the user terminal, to obtain the logged-in second account of the authentication terminal is specifically: sending the account obtaining request to the authentication terminal, where the account obtaining request includes a terminal identifier of the user terminal and/or a logged-in first account of the user terminal and is used to request the authentication terminal to feed back the logged-in second account of the authentication terminal.

S802. The user terminal receives the second account sent by the authentication terminal or a server.

In this embodiment of the present invention, after receiving the account obtaining request sent by the user terminal, the authentication terminal may perform the following operations:
Manner 1: The authentication terminal determines whether the user terminal is bound to the authentication terminal, for example, determines, based on a whitelist prestored in the authentication terminal, whether the identifier of the first terminal is in the list, and if the user terminal is bound to the authentication terminal, returns the second account to the user terminal; otherwise, the authentication terminal does not send the second account or ends the procedure.

Manner 2: The authentication terminal forwards the account obtaining request to the server, where the account obtaining request includes the terminal identifier of the user terminal. After receiving the request, the server determines whether the authentication terminal is bound to the user terminal, and if the terminals are bound, allows, by using an account obtaining response, the authentication terminal to send the second account to the user terminal; otherwise, disallows the authentication to send the second account or ends the procedure. The determining, by the server, whether the authentication terminal is bound to the user terminal may be implemented by determing an association relationship table stored in the server or a whitelist that is set for the authentication terminal, and is similar to the manner described in step S702 in the embodiment 2-1 shown in FIG. 7A and FIG. 7B.

Certainly, Manner 2 may alternatively be: After determining that the two terminals are bound, the server directly sends the second account to the user terminal.

S803 is the same as step S703 in the embodiment 2-1 shown in FIG. 7A and FIG. 7B: After obtaining the second account, the user terminal determines whether a first account matches the second account, and if the accounts do not match, performs step S804; otherwise, performs step S805.

S804 is the same as step S704 in the embodiment 2-1 shown in FIG. 7A and FIG. 7B: The user terminal requests, according to a user instruction, the server to switch the user terminal from the logged-in first account to the second account. Details are not described herein again.

S805 to S807 are the same as steps S705 to S707 in the embodiment 2-1 shown in FIG. 7A and FIG. 7B: When determining that the logged-in accounts of the two terminals are consistent, the user terminal sends a payment request to the server, so that the server completes a payment authorization procedure in this web page payment action by using the authentication terminal. Details are not described herein again.

FIG. 9A and FIG. 9B are a method flowchart illustrating that a user terminal obtains a logged-in account of an authentication terminal and a server performs account switching to complete payment according to a specific embodiment of the present invention. As shown in FIG. 9A and FIG. 9B, the method specifically includes the following steps.

S901 and S902 are the same as steps S701 and S702 in the embodiment 2-1 shown in FIG. 7A and FIG. 7B: After detecting an authentication terminal, a user terminal requests and obtains a logged-in second account of the authentication terminal from a server. Details are not described herein again.

S903 is the same as step S703 in the embodiment 2-1 shown in FIG. 7A and FIG. 7B: After obtaining the second account, the user terminal determines whether a first account matches the second account, and if the accounts do not match, performs step S904; otherwise, performs step S906.

S904. The user terminal sends an account switching request to the server according to a user instruction, to request the server to switch the user terminal from the logged-in first account to the second account.

In this embodiment of the present invention, the account switching request includes a terminal identifier of the authentication terminal, and may further include a terminal identifier of the user terminal or the logged-in first account of the user terminal.

In this embodiment of the present invention, manners of prompting a user by the user terminal, giving an instruction by the user, and the like are similar to those in the foregoing embodiment. Details are not described herein again.

S905. After receiving the account switching request, the server switches the user terminal from the logged-in first account to the second account through authorization by the authentication terminal.

In this embodiment of the present invention, a specific manner of switching, through authorization by the authentication terminal, the user terminal from the logged-in first account to the second account may be any one of the following:
Manner 1: The server sends an account switching authorization request to the authentication terminal, so that the authentication terminal uses a UI to prompt a user to make confirmation or require the user to perform identity authentication (for example, require the user to enter a fingerprint or a PIN), and sends an account switching authorization notification to the server after the user confirmation or user identity authentication succeeds, so that the server switches the user terminal from the logged-in first account to the second account.

Manner 2: After determining, based on a binding relationship stored in the server or a whitelist that is set for the authentication terminal, that the authentication terminal is bound to the user terminal, the server directly switches the user terminal from the logged-in first account to the second account.

Manner 3: With reference to Manner 1 and Manner 2, after determining that the authentication terminal is bound to the user terminal, the server sends an account switching authorization request to the authentication terminal, receives an account switching authorization notification that is sent by the authentication terminal after user confirmation or user identity authentication succeeds, and performs switching from the first account to the second account.

S906 to S908 are the same as steps S506 to S508 in the embodiment 1-3 shown in FIG. 5A and FIG. 5B: When determining that the logged-in accounts of the two terminals are consistent, the user terminal sends a payment request to the server, so that the server completes a payment authorization procedure in this web page payment action by using the authentication terminal. Details are not described herein again.

The embodiments shown in FIG. 3A and FIG. 3B to FIG. 8A, FIG. 8B, and FIG. 8C are described by using the Apple Pay web page payment function as a background, and certainly may also be applicable to web page payment functions provided by other third parties, for example, Alipay and WeChat Pay.

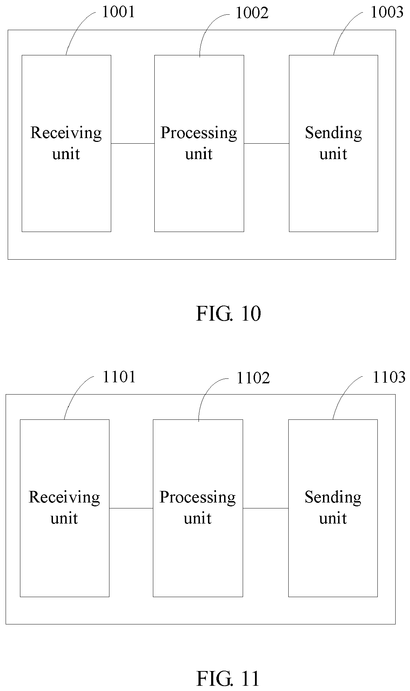

FIG. 10 shows a user terminal according to a specific embodiment of the present invention. The user terminal may perform steps performed by the user terminal in the method flowchart 2. The user terminal includes a receiving unit 1001, a processing unit 1002, and a sending unit 1003.

The processing unit is configured to detect a plurality of target terminals; and determine, from the plurality of target terminals, one target terminal as an authentication terminal based on selection of a user or selection of the user terminal.

The receiving unit 1001 is configured to obtain a terminal identifier of the authentication terminal.

The sending unit 1003 is configured to send a first message to a server, where the first message includes the terminal identifier of the authentication terminal. A first account has been logged in on the user terminal, and a second account has been logged in on the authentication terminal. The first message is used by the server to determine the second account based on the terminal identifier of the authentication terminal, and verify the first account with the second account.

The receiving unit 1001 is configured to receive the second message that is sent by the server when the server determines that the first account does not match the second account, where the second message is used to request the user terminal to perform account switching.

The processing unit 1002 is configured to: send an account switching authorization request including a terminal identifier of the user terminal to the authentication terminal based on the second message, so that the authentication terminal authorizes, based on the terminal identifier of the user terminal, the server to switch the user terminal from the logged-in first account to the second account.

The processing unit 1002 is configured to: when the first account does not match the second account, send an account switching authorization request including a terminal identifier of the user terminal to the authentication terminal by using the sending unit 1003, so that the authentication terminal authorizes, based on the terminal identifier of the user terminal, the server to switch the user terminal from the logged-in first account to the second account; or
send, to the server by using the sending unit 1003, a message used to indicate approval of performing account switching, so that the server requests, from the authentication terminal based on the terminal identifier of the authentication terminal, authorization to switch the user terminal from the logged-in first account to the second account; or
send an account switching request including the second account and a password of the second account to the server by using the sending unit 1003, so that the server switches the user terminal from the logged-in first account to the second account.

FIG. 11 shows a server according to a specific embodiment of the present invention. The server may be configured to perform content related to the server in the method procedure described in FIG. 2 or FIG. 6. The server specifically includes a receiving unit 1101, a processing unit 1102, and a sending unit 1103.

The receiving unit 1101 is configured to receive a first message sent by a user terminal, where the first message includes a terminal identifier of an authentication terminal.

When the first message includes terminal identifiers of N target terminals, the processing unit 1102 determines, from the N target terminals, one target terminal as the authentication terminal according to a preset manner or based on selection of the user terminal, where N is an integer greater than 1.

The processing unit 1102 is configured to: determine a logged-in second account of the authentication terminal based on the terminal identifier of the authentication terminal, and verify a logged-in first account of the user terminal with the second account.

The processing unit 1102 is configured to: when the first account does not match the second account, switch the user terminal from the logged-in first account to the second account, and complete payment authorization for this payment transaction by using the authentication terminal; or
the processing unit 1102 is configured to: when the first account matches the second account, complete payment authorization for this payment transaction by using the authentication terminal.

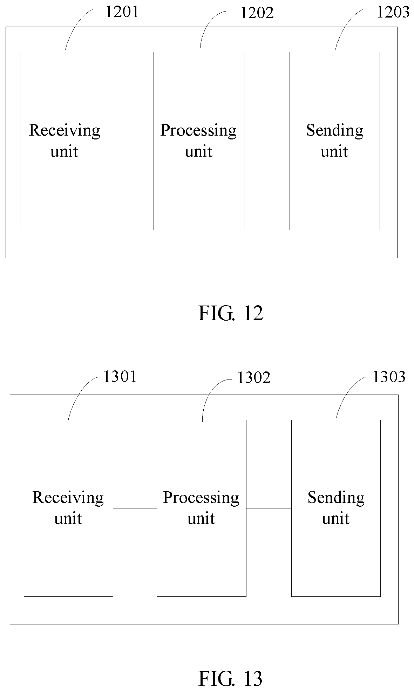

FIG. 12 shows a user terminal according to a specific embodiment of the present invention. The user terminal may perform steps performed by the user terminal in the method flowchart 6. The user terminal includes a receiving unit 1201, a processing unit 1202, and a sending unit 1203.

In one aspect, the sending unit 1203 is configured to send an account obtaining request including a terminal identifier of the user terminal to the authentication terminal, where the account obtaining request is used to request to obtain the second account.

In another aspect, the sending unit 1203 may send an account obtaining request including a terminal identifier of the authentication terminal to the server, where the account obtaining request is used to request to obtain the logged-in second account of the authentication terminal.

After the receiving unit 1201 detects a plurality of target terminals, the sending unit 1203 sends an authentication terminal selection request to the server, where the authentication terminal selection request includes a terminal identifier of each of the plurality of target terminals. The receiving unit 1203 is configured to receive at least one available target terminal, determined from the plurality of target terminals, that has an association relationship with the user terminal and that is sent by the server; and determine one of the at least one available target terminal as the authentication terminal.

Alternatively, after the receiving unit 1201 detects a plurality of target terminals, the sending unit 1203 sends an authentication terminal selection request to the server. The authentication terminal selection request includes a terminal identifier of at least one available target terminal that has an association relationship with the user terminal and that is determined from the plurality of target terminals. The receiving unit 1201 is configured to determine one of the at least one available target terminal as the authentication terminal based on the at least one available target terminal selected by the server.

The receiving unit 1201 is configured to obtain a logged-in second account of the authentication terminal; and the processing unit 1202 is configured to: if determining that the second account does not match a logged-in first account of the user terminal, request the server to switch the user terminal from the logged-in first account to the second account, and complete payment authorization for this payment transaction by using the authentication terminal.

The requesting the server to switch the user terminal from the logged-in first account to the second account may be: sending, by the sending unit 1203, an account switching authorization request including the terminal identifier of the user terminal to the authentication terminal, so that the authentication terminal authorizes, based on the terminal identifier of the user terminal, the server to switch the user terminal from the logged-in first account to the second account; or
sending, by the sending unit 1203, an account switching request including the second account or the terminal identifier of the authentication terminal to the server, so that the server requests, from the authentication terminal based on the second account or the terminal identifier of the authentication terminal, authorization to switch the user terminal from the logged-in first account to the second account; or
sending, by the sending unit 1203, an account switching request including the second account and a password of the second account to the server, so that the server switches the user terminal from the logged-in first account to the second account.

FIG. 13 shows a server according to a specific embodiment of the present invention. The server may perform content related to the server in the method procedure described in FIG. 6. The server includes a receiving unit 1301, a processing unit 1302, and a sending unit 1303.

The receiving unit 1301 is further configured to receive an account obtaining request, where the account obtaining request includes a terminal identifier of the authentication terminal.

When the account obtaining request includes a terminal identifier of each of a plurality of target terminals detected by the user terminal, the processing unit 1302 determines, based on the terminal identifier of the authentication terminal, that the user terminal is bound to the authentication terminal.

The sending unit 1303 is configured to send a logged-in second account of the authentication terminal to the user terminal, so that the user terminal determines whether the second account matches a first account.

The receiving unit 1301 is configured to receive an account switching request sent by the user terminal, where the account switching request includes the terminal identifier of the authentication terminal or the logged-in second account of the authentication terminal, and the account switching request is used to: instruct the server to request the authentication terminal to authorize the server to switch the user terminal from the logged-in first account to the logged-in second account of the authentication terminal, or instruct the server to switch the user terminal from the logged-in first account to the second account; or receive, for the server, an account switching authorization notification sent by the authentication terminal, where the account switching authorization notification includes a terminal identifier of the user terminal, and the account switching authorization notification is used to instruct the server to switch the user terminal from the logged-in first account to the logged-in second account of the authentication terminal.

The processing unit 1302 is configured to: when the first account is different from the second account, switch the user terminal from the logged-in first account to the second account, and complete payment authorization for this payment transaction by using the authentication terminal.

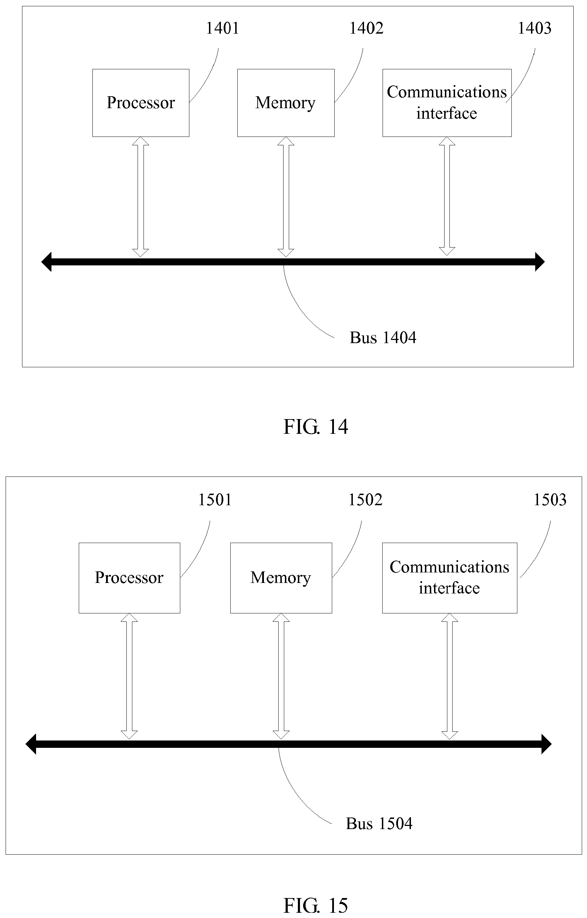

FIG. 14 shows a user terminal according to an embodiment of the present invention. As shown in FIG. 13, the media server includes a processor 1401, a memory 1402, a communications interface 1403, and a bus 1404. The processor 1301, the memory 1402, and the communications interface 1403 implement mutual communication connections by using the bus 1404.

The processor 1401 may be a general-purpose central processing unit (Central Processing Unit, CPU), a microprocessor, an application-specific integrated circuit (Application Specific Integrated Circuit, ASIC), or one or more integrated circuits, and is configured to execute a related program to implement the technical solutions provided in the embodiments of the present invention.

The memory 1402 may be a read-only memory (Read Only Memory, ROM), a static storage device, a dynamic storage device, or a random access memory (Random Access Memory, RAM). The memory 1402 may store an operating system, to perform the methods performed by the user terminal described in FIG. 2 and FIG. 6. When the technical solutions provided in the embodiments of the present invention are implemented by software or firmware, program code used to implement any optional technical solution provided in the method embodiments of the present invention is stored in the memory 1402, and is executed by the processor 1401. The communications interface 1403 is configured to communicate with a headend or an operation management platform.

The bus 1404 may include a path on which information is transmitted between the components (for example, the processor 1401, the memory 1402, and the communications interface 1403) of the device.

FIG. 15 shows a server according to an embodiment of the present invention. As shown in FIG. 15, the media server includes a processor 1501, a memory 1502, a communications interface 1503, and a bus 1504. The processor 1501, the memory 1502, and the communications interface 1503 implement mutual communication connections by using the bus 1504.

The processor 1501 may be a general-purpose central processing unit (Central Processing Unit, CPU), a microprocessor, an application-specific integrated circuit (Application Specific Integrated Circuit, ASIC), or one or more integrated circuits, and is configured to execute a related program to implement the technical solutions provided in the embodiments of the present invention.

The memory 1502 may be a read-only memory (Read Only Memory, ROM), a static storage device, a dynamic storage device, or a random access memory (Random Access Memory, RAM). The memory 1502 may store an operating system, to perform the methods performed by the server described in FIG. 2 and FIG. 6. When the technical solutions provided in the embodiments of the present invention are implemented by software or firmware, program code used to implement any optional technical solution provided in the method embodiments of the present invention is stored in the memory 1502, and is executed by the processor 1501. The communications interface 1503 is configured to communicate with a headend or an operation management platform.

The bus 1504 may include a path on which information is transmitted between the components (for example, the processor 1501, the memory 1502, and the communications interface 1503) of the device.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraints of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention.

## Claims

1. An authentication terminal-based payment method, wherein the method specifically comprises:
obtaining, by a user terminal (S301), a terminal identifier of an authentication terminal; and
sending (S302), by the user terminal, a first message to a server, wherein the first message comprises the terminal identifier of the authentication terminal;
determining (S303), by the server, a logged-in second account of the authentication terminal based on the terminal identifier of the authentication terminal, and verifying (S304) a logged-in first account of the user terminal with the second account; and
when the first account does not match the second account, switching, (S306) by the server, the user terminal from the logged-in first account to the second account and authorizing (S307) a payment transaction by using the authentication terminal;
when the first account matches the second account authorizing (S307), by the server, the payment transaction by using the authentication terminal.

2. The method according to claim 1, wherein that the first account does not match the second account specifically comprises: the first account is different from the second account; and
that the first account matches the second account specifically comprises: the first account is the same as the second account.

3. The method according to claim 1, wherein that the first account does not match the second account specifically comprises: the first account and the second account are different and are not bound to each other; and
that the first account matches the second account specifically comprises: the first account is the same as the second account, or the first account and the second account are different and are bound to each other.

4. The method according to claim 1, wherein before the obtaining, by a user terminal, a terminal identifier of an authentication terminal, the method further comprises:
detecting, by the user terminal, a plurality of target terminals; and
determining a first target terminal as the authentication terminal based on selection of a user or selection of the user terminal, wherein the first target terminal is one of the plurality of target terminals.

5. The method according to claim 1, wherein the obtaining, by a user terminal, a terminal identifier of an authentication terminal specifically comprises:
detecting, by the user terminal, N target terminals, and obtaining a terminal identifier of each of the N target terminals, wherein N is a positive integer greater than 1; and
that the first message comprises the terminal identifier of the authentication terminal specifically comprises:
the first message comprises terminal identifiers of the N target terminals; wherein the method further comprises:
determining, by the server, from the N target terminals, one target terminal as the authentication terminal, wherein the determining specifically comprises:
determining, by the server, from the N target terminals, M target terminals whose logged-in accounts match the first account; and determining, by the server from the M target terminals, one target terminal as the authentication terminal according to a preset manner, wherein the preset manner comprises any one or more of an account use frequency, an account priority, a terminal identifier associated with the first account and stored in the server, or an account associated with a terminal identifier of the user terminal and stored in the server; or
determining, by the server, that no logged-in account of any of the N target terminals does match the first account; and determining, by the server, from the N target terminals, one target terminal as the authentication terminal according to the preset manner, wherein the preset manner comprises any one or more of an account use frequency, an account priority, a terminal identifier associated with the first account and stored in the server, or an account associated with a terminal identifier of the user terminal and stored in the server; or
sending, by the server, a determining message to the user terminal after determining, from the N target terminals, M target terminals whose logged-in accounts match the first account, wherein the determining message is used to request the user terminal to determine the authentication terminal; determining, by the user terminal, a first target terminal as the authentication terminal based on selection of the user or selection of the user terminal, wherein the first target terminal is one of the M target terminals; and
sending, by the user terminal, a response message to the server in response to the determining message, wherein the response message is used to inform the server of the determined authentication terminal; or
sending, by the server, a determining message to the user terminal after determining that no logged-in account of any of the N target terminals does match the first account, wherein the determining message is used to request the user terminal to determine the authentication terminal; determining, by the user terminal, a first target terminal as the authentication terminal based on selection of the user or selection of the user terminal, wherein the first target terminal is one of the N target terminals; and sending, by the user terminal, a response message to the server in response to the determining message, wherein the response message is used to inform the server of the determined authentication terminal.

6. The method according to claim 4 or 5, wherein the determining a first target terminal as the authentication terminal based on selection of the user terminal specifically comprises:
selecting a first target terminal nearest to the user terminal as the authentication terminal;
selecting, as the authentication terminal, a first target terminal bound to the user terminal; or
selecting, as the authentication terminal, a first target terminal that performs payment authorization operations most frequently in historical transaction.

7. The method according to claim 1, wherein the method further comprises:
receiving, by the user terminal, a second message that is sent by the server when the server determines that the first account does not match the second account, wherein the second message is used to request the user terminal to perform account switching; and
sending, by the user terminal, an account switching authorization request comprising a terminal identifier of the user terminal to the authentication terminal based on the second message, so that the authentication terminal authorizes, based on the terminal identifier of the user terminal, the server to switch the user terminal from the logged-in first account to the second account; or
sending, to the server, a message used to indicate approval of performing account switching, so that the server requests, from the authentication terminal based on the terminal identifier of the authentication terminal, authorization to switch the user terminal from the logged-in first account to the second account; or
sending an account switching request comprising the second account and a password of the second account to the server, so that the server switches the user terminal from the logged-in first account to the second account.

8. The method according to claim 1, wherein the method further comprises:
receiving, by the user terminal, a third message sent by the server, wherein the third message comprises a result of verification performed by the server on the first account and the second account; and
when determining, based on the result of verification, that the first account does not match the second account, sending, by the user terminal, an account switching authorization request comprising a terminal identifier of the user terminal to the authentication terminal, so that the authentication terminal authorizes, based on the terminal identifier of the user terminal, the server to switch the user terminal from the logged-in first account to the second account; or
sending, to the server, a message used to indicate approval of performing account switching, so that the server requests, from the authentication terminal based on the terminal identifier of the authentication terminal, authorization to switch the user terminal from the logged-in first account to the second account; or
sending an account switching request comprising the second account and a password of the second account to the server, so that the server switches the user terminal from the logged-in first account to the second account.

9. A system comprising a server and a user terminal, the user terminal comprising:
a receiving unit (1001), configured to obtain a terminal identifier of an authentication terminal; and
a sending unit (1003), configured to send a first message to the server, wherein the first message comprises the terminal identifier of the authentication terminal; and the server comprising:
a receiving unit (1101), configured to receive the first message;
a processing unit (1102), configured to determine a logged-in second account of the authentication terminal based on the terminal identifier of the authentication terminal, and verify a logged-in first account of the user terminal with the second account, wherein
the processing unit (1102) is further configured to: when the first account does not match the second account, switch the logged-in first account to the second account, and authorize a payment transaction by using the authentication terminal; when the first account matches the second account, authorize the payment transaction by using the authentication terminal.

10. The system according to claim 9, wherein that the first account does not match the second account specifically comprises: the first account is different from the second account; and
that the first account matches the second account specifically comprises: the first account is the same as the second account.

11. The system according to claim 9, wherein that the first account does not match the second account specifically comprises: the first account and the second account are different and are not bound to each other; and
that the first account matches the second account specifically comprises: the first account is the same as the second account, or the first account and the second account are different and are bound to each other.

12. The system according to claim 9, the user terminal further comprises:
a processing unit (1002), configured to detect a plurality of target terminals, wherein
the processing unit (1002) of the user terminal is further configured to determine a first target terminal as the authentication terminal based on selection of the user or selection of the user terminal, wherein the first target terminal is one of the plurality of target terminals.

13. The system according to claim 9 wherein the obtaining, by a receiving unit (1001) of the user terminal, a terminal identifier of an authentication terminal specifically comprises:
detecting N target terminals, and obtaining a terminal identifier of each of the N target terminals, wherein N is a positive integer greater than 1; and
that the first message comprises the terminal identifier of the authentication terminal specifically comprises:
the first message comprises terminal identifiers of the N target terminals, wherein the receiving unit (1101) of the server is configured to receive the first message sent by the user terminal, and the processing unit (1102) of the server is configured to determine from the N target terminals, one target terminal as the authentication terminal, wherein that the processing unit (1102) of the server is configured to determine, from the N target terminals, one target terminal as the authentication terminal specifically comprises:
the processing unit (1102) of the server is configured to:
determine from the N target terminals, M target terminals whose logged-in accounts match the first account; and determine from the M target terminals, one target terminal as the authentication terminal according to a preset manner, wherein the preset manner comprises any one or more of an account use frequency, an account priority, a terminal identifier associated with the first account and stored in the server, or an account associated with a terminal identifier of the user terminal and stored in the server; or
determine that no logged-in account of any of the N target terminals does match the first account; and determine from the N target terminals, one target terminal as the authentication terminal according to the preset manner, wherein the preset manner comprises any one or more of an account use frequency, an account priority, a terminal identifier associated with the first account and stored in the server, or an account associated with a terminal identifier of the user terminal and stored in the server; or
the sending unit (1103) of the server is configured to send a determining message to the user terminal after the processing unit (1102) of the server determines, from the N target terminals, M target terminals whose logged-in accounts match the first account, wherein the determining message is used to request the user terminal to select one target terminal as the authentication terminal; the receiving unit (1001) of the user terminal is configured to receive the determining message; a processing unit (1002) of the user terminal is configured to determine a first target terminal as the authentication terminal based on selection of the user or selection of the user terminal, wherein the first target terminal is one of the M target terminals; and the sending unit (1003) of the user terminal is configured to send a response message to the server in response to the determining message, wherein the response message is used to inform the server of the determined authentication terminal; and the receiving unit (1101) of the server is configured to receive the response message; or
the sending unit (1103) of the server is configured to send a determining message to the user terminal after the processing unit (1102) of the server determines that no logged-in account of any of the N target terminals does match the first account, wherein the determining message is used to request the user terminal to select one target terminal as the authentication terminal; the receiving unit (1001) of the user terminal is configured to receive the determining message; a processing unit (1002) of the user terminal is configured to determine a first target terminal as the authentication terminal based on selection of the user or selection of the user terminal, wherein the first target terminal is one of the N target terminals; and the sending unit (1003) of the user terminal is configured to send a response message to the server in response to the determining message, wherein the response message is used to inform the server of the determined authentication terminal; and the receiving unit (1101) of the server is configured to receive the response message.

14. The system according to claim 13, wherein that the processing unit (1002) of the user terminal is configured to determine a first target terminal as the authentication terminal based on selection of the user terminal specifically comprises: the processing unit (1002) of the user terminal is configured to select a first target terminal nearest to the user terminal as the authentication terminal; select, as the authentication terminal, a first target terminal bound to the user terminal; or select, as the authentication terminal, a first target terminal that performs payment authorization operations most frequently in historical transaction.

15. The system according to claim 14, wherein the receiving unit (1001) of the user terminal is further configured to receive the second message that is sent by the server when the server determines that the first account does not match the second account, wherein the second message is used to request the user terminal to perform account switching; and
the sending unit (1003) of the user terminal is configured to: send an account switching authorization request comprising a terminal identifier of the user terminal to the authentication terminal based on the second message, so that the authentication terminal authorizes, based on the terminal identifier of the user terminal, the server to switch the user terminal from the logged-in first account to the second account; or
send, to the server, a message used to indicate approval of performing account switching, so that the server requests, from the authentication terminal based on the terminal identifier of the authentication terminal, authorization to switch the user terminal from the logged-in first account to the second account; or
send an account switching request comprising the second account and a password of the second account to the server, so that the server switches the user terminal from the logged-in first account to the second account.

## Patentansprüche

1. Zahlungsmethode basierend auf einem Authentifizierungsendgerät, wobei das Verfahren speziell Folgendes umfasst:
Erhalten, durch ein Benutzerendgerät (S301), einer Endgerätkennung eines Authentifizierungsendgeräts; und
Senden (S302), durch das Benutzerendgerät, einer ersten Nachricht an einen Server, wobei die erste Nachricht die Endgerätkennung des Authentifizierungsendgeräts umfasst;
Bestimmen (S303), durch den Server, eines angemeldeten zweiten Kontos des Authentifizierungsendgeräts basierend auf der Endgerätkennung des Authentifizierungsendgeräts, und Verifizieren (S304) eines angemeldeten ersten Kontos des Benutzerendgeräts mit dem zweiten Konto; und
wenn das erste Konto nicht mit dem zweiten Konto übereinstimmt, Wechseln (S306), durch den Server, des Benutzerendgeräts von dem angemeldeten ersten Konto zu dem zweiten Konto und Autorisieren (S307) eines Zahlungsvorgangs durch Nutzen des Authentifizierungsendgeräts;
wenn das erste Konto mit dem zweiten Konto übereinstimmt, Autorisieren (S307), durch den Server, des Zahlungsvorgangs durch Nutzen des Authentifizierungsendgeräts.

2. Verfahren nach Anspruch 1, wobei, dass das erste Konto nicht mit dem zweiten Konto übereinstimmt, speziell Folgendes umfasst: das erste Konto unterscheidet sich von dem zweiten Konto; und,
dass das erste Konto mit dem zweiten Konto übereinstimmt, speziell Folgendes umfasst: das erste Konto ist dasselbe wie das zweite Konto.

3. Verfahren nach Anspruch 1, wobei, dass das erste Konto nicht mit dem zweiten Konto übereinstimmt, speziell Folgendes umfasst: das erste Konto und das zweite Konto sind unterschiedlich und nicht aneinander gebunden; und,
dass das erste Konto mit dem zweiten Konto übereinstimmt, speziell Folgendes umfasst: das erste Konto ist dasselbe wie das zweite Konto oder das erste Konto und das zweite Konto sind unterschiedlich und aneinander gebunden.

4. Verfahren nach Anspruch 1, wobei vor dem Erhalten, durch ein Benutzerendgerät, einer Endgerätkennung eines Authentifizierungsendgeräts das Verfahren ferner Folgendes umfasst:
Erfassen, durch das Benutzerendgerät, mehrerer Zielendgeräte; und
Bestimmen eines ersten Zielendgeräts als das Authentifizierungsendgerät basierend auf einer Auswahl eines Benutzers oder einer Auswahl des Benutzerendgeräts, wobei das erste Zielendgerät eines der mehreren Zielendgeräte ist.

5. Verfahren nach Anspruch 1, wobei das Erhalten, durch ein Benutzerendgerät, einer Endgerätkennung eines Authentifizierungsendgeräts speziell Folgendes umfasst:
Erfassen, durch das Benutzerendgerät, von N Zielendgeräten, und Erhalten einer Endgerätkennung von jedem der N Zielendgeräte, wobei N eine positive ganze Zahl größer als 1 ist; und,
dass die erste Nachricht die Endgerätkennung des Authentifizierungsendgeräts umfasst, speziell Folgendes umfasst:
die erste Nachricht umfasst Endgerätkennungen der N Zielendgeräte; wobei das Verfahren ferner Folgendes umfasst:
Bestimmen, durch den Server, aus den N Zielendgeräten, eines Zielendgeräts als das Authentifizierungsendgerät, wobei das Bestimmen speziell Folgendes umfasst:
Bestimmen, durch den Server, aus den N Zielendgeräten, von M Zielendgeräten, deren angemeldete Konten mit dem ersten Konto übereinstimmen; und Bestimmen, durch den Server aus den M Zielendgeräten, eines Zielendgeräts als das Authentifizierungsendgerät gemäß einer voreingestellten Weise, wobei die voreingestellte Weise Folgendes umfasst: eine Kontonutzungsfrequenz, eine Kontopriorität, eine Endgerätkennung, die mit dem ersten Konto verknüpft und auf dem Server gespeichert ist, und/oder ein Konto, das mit einer Endgerätkennung des Benutzerendgeräts verknüpft und auf dem Server gespeichert ist; oder
Bestimmen, durch den Server, dass kein angemeldetes Konto von einem beliebigen der N Zielendgeräte mit dem ersten Konto übereinstimmt; und Bestimmen, durch den Server, aus den N Zielendgeräten, eines Zielendgeräts als das Authentifizierungsendgerät gemäß der voreingestellten Weise, wobei die voreingestellte Weise Folgendes umfasst: eine Kontonutzungsfrequenz, eine Kontopriorität, eine Endgerätkennung die mit dem ersten Konto verknüpft und auf dem Server gespeichert ist, und/oder ein Konto, das mit einer Endgerätkennung des Benutzerendgeräts verknüpft und auf dem Server gespeichert ist; oder
Senden, durch den Server, einer bestimmenden Nachricht an das Benutzerendgerät nach dem Bestimmen, aus den N Zielendgeräten, der M Zielendgeräte, deren angemeldete Konten mit dem ersten Konto übereinstimmen, wobei die bestimmende Nachricht genutzt wird, um das Benutzerendgerät anzufordern, das Authentifizierungsendgerät zu bestimmen; Bestimmen, durch das Benutzerendgerät, eines ersten Zielendgeräts als das Authentifizierungsendgerät basierend auf der Auswahl des Benutzers oder der Auswahl des Benutzerendgeräts, wobei das erste Zielendgerät eines der M Zielendgeräte ist; und
Senden, durch das Benutzerendgerät, einer Antwortnachricht an den Server als Reaktion auf die bestimmende Nachricht, wobei die Antwortnachricht genutzt wird, um den Server über das bestimmte Authentifizierungsendgerät zu informieren; oder
Senden, durch den Server, einer bestimmenden Nachricht an das Benutzerendgerät nach dem Bestimmen, dass kein angemeldetes Konto eines beliebigen der N Zielendgeräte mit dem ersten Konto übereinstimmt, wobei die bestimmende Nachricht genutzt wird, um das Benutzerendgerät anzufordern, das Authentifizierungsendgerät zu bestimmen; Bestimmen, durch das Benutzerendgerät, eines ersten Zielendgeräts als das Authentifizierungsendgerät basierend auf der Auswahl des Benutzers oder der Auswahl des Benutzerendgeräts, wobei das erste Zielendgerät eines der N Zielendgeräte ist; und Senden, durch das Benutzerendgerät, einer Antwortnachricht an den Server als Reaktion auf die bestimmende Nachricht, wobei die Antwortnachricht genutzt wird, um den Server über das bestimmte Authentifizierungsendgerät zu informieren.

6. Verfahren nach Anspruch 4 oder 5, wobei das Bestimmen eines ersten Zielendgeräts als das Authentifizierungsendgerät basierend auf der Auswahl des Benutzerendgeräts speziell Folgendes umfasst: Auswählen eines ersten Zielendgeräts, das dem Benutzerendgerät am nächsten ist, als das Authentifizierungsendgerät; Auswählen, als das Authentifizierungsendgerät, eines ersten Zielendgeräts, das an das Benutzerendgerät gebunden ist; oder Auswählen, als das Authentifizierungsendgerät, eines ersten Zielendgeräts, das Zahlungsautorisierungsabläufe in einem historischen Vorgang am häufigsten durchführt.

7. Verfahren nach Anspruch 1, wobei das Verfahren ferner Folgendes umfasst:
Empfangen, durch das Benutzerendgerät, einer zweiten Nachricht, die durch den Server gesendet wird, wenn der Server bestimmt, dass das erste Konto nicht mit dem zweiten Konto übereinstimmt, wobei die zweite Nachricht genutzt wird, um das Benutzerendgerät anzufordern, einen Kontowechsel durchzuführen; und
Senden, durch das Benutzerendgerät, einer Kontowechselautorisierungsanforderung, die eine Endgerätkennung des Benutzerendgeräts umfasst, an das Authentifizierungsendgerät basierend auf der zweiten Nachricht, so dass das Authentifizierungsendgerät, basierend auf der Endgerätkennung des Benutzerendgeräts, den Server autorisiert, um das Benutzerendgerät von dem angemeldeten ersten Konto zu dem zweiten Konto zu wechseln; oder
Senden, an den Server, einer Nachricht, die genutzt wird, um eine Genehmigung eines Durchführens eines Kontowechsels anzugeben, so dass der Server, von dem Authentifizierungsendgerät basierend auf der Endgerätkennung des Authentifizierungsendgeräts, eine Autorisierung anfordert, um das Benutzerendgerät von dem angemeldeten ersten Konto zu dem zweiten Konto zu wechseln; oder
Senden einer Kontowechselanforderung, die das zweite Konto und ein Passwort des zweiten Kontos umfasst, an den Server, so dass der Server das Benutzerendgerät von dem angemeldeten ersten Konto zu dem zweiten Konto wechselt.

8. Verfahren nach Anspruch 1, wobei das Verfahren ferner Folgendes umfasst:
Empfangen, durch das Benutzerendgerät, einer dritten Nachricht, die durch den Server gesendet wird, wobei die dritte Nachricht ein Ergebnis einer durch den Server an dem ersten Konto und dem zweiten Konto durchgeführten Verifizierung umfasst; und
wenn bestimmt wird, basierend auf dem Ergebnis der Verifizierung, dass das erste Konto nicht mit dem zweiten Konto übereinstimmt, Senden, durch das Benutzerendgerät, einer Kontowechselautorisierungsanforderung, die eine Endgerätkennung des Benutzerendgeräts umfasst, an das Authentifizierungsendgerät, so dass das Authentifizierungsendgerät, basierend auf der Endgerätkennung des Benutzerendgeräts, den Server autorisiert, das Benutzerendgerät von dem angemeldeten ersten Konto zu dem zweiten Konto zu wechseln; oder
Senden, an den Server, einer Nachricht, die genutzt wird, um eine Genehmigung eines Durchführens eines Kontowechsels anzugeben, so dass der Server, von dem Authentifizierungsendgerät basierend auf der Endgerätkennung des Authentifizierungsendgeräts, eine Autorisierung anfordert, um das Benutzerendgerät von dem angemeldeten ersten Konto zu dem zweiten Konto zu wechseln; oder
Senden einer Kontowechselanforderung, die das zweite Konto und ein Passwort des zweiten Kontos umfasst, an den Server, so dass der Server das Benutzerendgerät von dem angemeldeten ersten Konto zu dem zweiten Konto wechselt.

9. System, das einen Server und ein Benutzerendgerät umfasst, wobei das Benutzerendgerät Folgendes umfasst:
eine Empfangseinheit (1001), die konfiguriert ist, um eine Endgerätkennung eines Authentifizierungsendgeräts zu erhalten; und
eine Sendeeinheit (1003), die konfiguriert ist, um eine erste Nachricht an den Server zu senden, wobei die erste Nachricht die Endgerätkennung des Authentifizierungsendgeräts umfasst; und wobei der Server Folgendes umfasst:
eine Empfangseinheit (1101), die konfiguriert ist, um die erste Nachricht zu empfangen;
eine Verarbeitungseinheit (1102), die konfiguriert ist, um ein angemeldetes zweites Konto des Authentifizierungsendgeräts basierend auf der Endgerätkennung des Authentifizierungsendgeräts zu bestimmen und ein angemeldetes erstes Konto des Benutzerendgeräts mit dem zweiten Konto zu verifizieren, wobei
die Verarbeitungseinheit (1102) ferner für Folgendes konfiguriert ist: wenn das erste Konto nicht mit dem zweiten Konto übereinstimmt, Wechseln des angemeldeten ersten Kontos zu dem zweiten Konto und Autorisieren eines Zahlungsvorgangs durch Nutzen des Authentifizierungsendgeräts;
wenn das erste Konto mit dem zweiten Konto übereinstimmt, Autorisieren des Zahlungsvorgangs durch Nutzen des Authentifizierungsendgeräts.

10. System nach Anspruch 9, wobei, dass das erste Konto nicht mit dem zweiten Konto übereinstimmt, speziell Folgendes umfasst: das erste Konto unterscheidet sich von dem zweiten Konto; und,
dass das erste Konto mit dem zweiten Konto übereinstimmt, speziell Folgendes umfasst: das erste Konto ist dasselbe wie das zweite Konto.

11. System nach Anspruch 9, wobei, dass das erste Konto nicht mit dem zweiten Konto übereinstimmt, speziell Folgendes umfasst: das erste Konto und das zweite Konto sind unterschiedlich und nicht aneinander gebunden; und,
dass das erste Konto mit dem zweiten Konto übereinstimmt, speziell Folgendes umfasst: das erste Konto ist dasselbe wie das zweite Konto oder das erste Konto und das zweite Konto sind unterschiedlich und aneinander gebunden.

12. System nach Anspruch 9, wobei das Endgerät ferner Folgendes umfasst:
eine Verarbeitungseinheit (1002), die konfiguriert ist, um mehrere Zielendgeräte zu erfassen, wobei
die Verarbeitungseinheit (1002) des Benutzerendgeräts ferner konfiguriert ist, um ein erstes Zielendgerät basierend auf der Auswahl des Benutzers oder der Auswahl des Benutzerendgeräts als das Authentifizierungsendgerät zu bestimmen, wobei das erste Zielendgerät eines der mehreren Zielendgeräte ist.

13. System nach Anspruch 9, wobei das Erhalten, durch eine Empfangseinheit (1001) des Benutzerendgeräts, einer Endgerätkennung eines Authentifizierungsendgeräts speziell Folgendes umfasst:
Erfassen von N Zielendgeräten und Erhalten einer Endgerätkennung von jedem der N Zielendgeräte, wobei N eine positive ganze Zahl größer als 1 ist; und,
dass die erste Nachricht die Endgerätkennung des Authentifizierungsendgeräts umfasst, speziell Folgendes umfasst:
die erste Nachricht umfasst Endgerätkennungen der N Zielendgeräte, wobei die Empfangseinheit (1101) des Servers konfiguriert ist, um die erste Nachricht zu empfangen, die durch das Benutzerendgerät gesendet wird, und die Verarbeitungseinheit (1102) des Servers konfiguriert ist, um, aus den N Zielendgeräten, ein Zielendgerät als das Authentifizierungsendgerät zu bestimmen, wobei, dass die Verarbeitungseinheit (1102) des Servers konfiguriert ist, um, aus den N Zielendgeräten, ein Zielendgerät als das Authentifizierungsendgerät zu bestimmen, Folgendes umfasst:
die Verarbeitungseinheit (1102) des Servers ist für Folgendes konfiguriert:
Bestimmen, aus den N Zielendgeräten, von M Zielendgeräten, deren angemeldete Konten mit dem ersten Konto übereinstimmen; und Bestimmen, aus den M Zielendgeräten, eines Zielendgeräts als das Authentifizierungsendgerät gemäß einer voreingestellten Weise, wobei die voreingestellte Weise Folgendes umfasst: eine Kontonutzungsfrequenz, eine Kontopriorität, eine Endgerätkennung, die mit dem ersten Konto verknüpft und auf dem Server gespeichert ist, und/oder ein Konto, das mit einer Endgerätkennung des Benutzerendgeräts verknüpft und auf dem Server gespeichert ist; oder
Bestimmen, dass kein angemeldetes Konto von einem beliebigen der N Zielendgeräte mit dem ersten Konto übereinstimmt; und Bestimmen, aus den N Zielendgeräten, eines Zielendgeräts als das Authentifizierungsendgerät gemäß der voreingestellten Weise, wobei die voreingestellte Weise Folgendes umfasst: eine Kontonutzungsfrequenz, eine Kontopriorität, eine Endgerätkennung, die mit dem ersten Konto verknüpft und auf dem Server gespeichert ist, und/oder ein Konto, das mit einer Endgerätkennung des Benutzerendgeräts verknüpft und auf dem Server gespeichert ist; oder
die Sendeeinheit (1103) des Servers konfiguriert ist, um eine bestimmende Nachricht an das Benutzerendgerät zu senden, nachdem die Verarbeitungseinheit (1102) des Servers, aus den N Zielendgeräten, M Zielendgeräte bestimmt, deren angemeldete Konten mit dem ersten Konto übereinstimmen, wobei die bestimmende Nachricht genutzt wird, um das Benutzerendgerät anzufordern, ein Zielendgerät als das Authentifizierungsendgerät auszuwählen; die Empfangseinheit (1001) des Benutzerendgeräts ist konfiguriert, um die bestimmende Nachricht zu empfangen; eine Verarbeitungseinheit (1002) des Benutzerendgeräts ist konfiguriert, um ein erstes Zielendgerät als das Authentifizierungsendgerät basierend auf der Auswahl des Benutzers oder der Auswahl des Benutzerendgeräts zu bestimmen, wobei das erste Zielendgerät eines der M Zielendgeräte ist; und die Sendeeinheit (1003) des Benutzerendgeräts ist konfiguriert, um als Reaktion auf die bestimmende Nachricht eine Antwortnachricht an den Server zu senden, wobei die Antwortnachricht genutzt wird, um den Server über das bestimmte Authentifizierungsendgerät zu informieren; und die Empfangseinheit (1101) des Servers ist konfiguriert, um die Antwortnachricht zu empfangen; oder
die Sendeeinheit (1103) des Servers ist konfiguriert, um eine bestimmende Nachricht an das Benutzerendgerät zu senden, nachdem die Verarbeitungseinheit (1102) des Servers bestimmt, dass kein angemeldetes Konto eines beliebigen der N Zielendgeräte mit dem ersten Konto übereinstimmt, wobei die bestimmende Nachricht genutzt wird, um das Benutzerendgerät anzufordern, ein Zielendgerät als das Authentifizierungsendgerät auszuwählen; die Empfangseinheit (1001) des Benutzerendgeräts ist konfiguriert, um die bestimmende Nachricht zu empfangen; eine Verarbeitungseinheit (1002) des Benutzerendgeräts ist konfiguriert, um ein erstes Zielendgerät als das Authentifizierungsendgerät basierend auf der Auswahl des Benutzers oder der Auswahl des Benutzerendgeräts zu bestimmen, wobei das erste Zielendgerät eines der N Zielendgeräte ist; und die Sendeeinheit (1003) des Benutzerendgeräts ist konfiguriert, um als Reaktion auf die bestimmende Nachricht eine Antwortnachricht an den Server zu senden, wobei die Antwortnachricht genutzt wird, um den Server über das bestimmte Authentifizierungsendgerät zu informieren; und die Empfangseinheit (1101) des Servers konfiguriert ist, um die Antwortnachricht zu empfangen.

14. System nach Anspruch 13, wobei, dass die Verarbeitungseinheit (1002) des Benutzerendgeräts konfiguriert ist, um ein erstes Zielendgerät basierend auf der Auswahl des Benutzerendgeräts als das Authentifizierungsendgerät zu bestimmen, speziell Folgendes umfasst: die Verarbeitungseinheit (1002) des Benutzerendgeräts ist konfiguriert, um ein erstes Zielendgerät, das dem Benutzerendgerät am nächsten ist, als das Authentifizierungsendgerät auszuwählen; Auswählen, als das Authentifizierungsendgerät, eines ersten Zielendgeräts, das an das Benutzerendgerät gebunden ist; oder Auswählen, als das Authentifizierungsendgerät, eines ersten Zielendgeräts, das Zahlungsautorisierungsabläufe in dem historischen Vorgang am häufigsten durchführt.

15. System nach Anspruch 14, wobei die Empfangseinheit (1001) des Benutzerendgeräts ferner konfiguriert ist, um die zweite Nachricht zu empfangen, die durch den Server gesendet wird, wenn der Server bestimmt, dass das erste Konto nicht mit dem zweiten Konto übereinstimmt, wobei die zweite Nachricht genutzt wird, um das Benutzerendgerät anzufordern, einen Kontowechsel durchzuführen; und
die Sendeeinheit (1003) des Benutzerendgeräts für Folgendes konfiguriert ist: Senden einer Kontowechselautorisierungsanforderung, die eine Endgerätkennung des Benutzerendgeräts umfasst, an das Authentifizierungsendgerät basierend auf der zweiten Nachricht, so dass das Authentifizierungsendgerät, basierend auf der Endgerätkennung des Benutzerendgeräts, den Server autorisiert, das Benutzerendgerät von dem angemeldeten ersten Konto zu dem zweiten Konto zu wechseln; oder
Senden, an den Server, einer Nachricht, die genutzt wird, um die Genehmigung des Durchführens des Kontowechsels anzugeben, so dass der Server, von dem Authentifizierungsendgerät basierend auf der Endgerätkennung des Authentifizierungsendgeräts, die Autorisierung anfordert, um das Benutzerendgerät von dem angemeldeten ersten Konto zu dem zweiten Konto zu wechseln; oder
Senden einer Kontowechselanforderung, die das zweite Konto und ein Passwort des zweiten Kontos umfasst, an den Server, so dass der Server das Benutzerendgerät von dem angemeldeten ersten Konto zu dem zweiten Konto wechselt.

## Revendications

1. Procédé de paiement sur terminal d'authentification, le procédé comprenant spécifiquement :
l'obtention, par un terminal utilisateur (S301), d'un identifiant de terminal d'un terminal d'authentification ; et
l'envoi (S302), par le terminal utilisateur, d'un premier message à un serveur, le premier message comprenant l'identifiant de terminal du terminal d'authentification ;
la détermination (S303), par le serveur, d'un second compte connecté du terminal d'authentification en fonction de l'identifiant de terminal du terminal d'authentification, et la vérification (S304) d'un premier compte connecté du terminal utilisateur à l'aide du second compte ; et
lorsque le premier compte ne correspond pas au second compte, le fait d'amener, par le serveur, le terminal utilisateur à commuter (S306) du premier compte connecté au second compte et l'autorisation (S307) d'une transaction de paiement en utilisant le terminal d'authentification ;
lorsque le premier compte correspond au second compte, l'autorisation (S307), par le serveur, de la transaction de paiement en utilisant le terminal d'authentification.

2. Procédé selon la revendication 1, le fait que le premier compte ne correspond pas au second compte comprenant spécifiquement : le fait que le premier compte est différent du second compte ; et
le fait que le premier compte correspond au second compte comprenant spécifiquement : le fait que le premier compte est le même que le second compte.

3. Procédé selon la revendication 1, le fait que le premier compte ne correspond pas au second compte comprenant spécifiquement : le fait que le premier compte et le second compte sont différents et ne sont pas liés l'un à l'autre ; et
le fait que le premier compte correspond au second compte comprenant spécifiquement : le fait que le premier compte est le même que le second compte, ou le fait que le premier compte et le second compte sont différents et sont liés l'un à l'autre.

4. Procédé selon la revendication 1, le procédé comprenant en outre, avant l'obtention, par un terminal utilisateur, d'un identifiant de terminal d'un terminal d'authentification :
la détection, par le terminal utilisateur, d'une pluralité de terminaux cibles ; et
la détermination d'un premier terminal cible comme terminal d'authentification en fonction de la sélection d'un utilisateur ou de la sélection du terminal utilisateur, le premier terminal cible étant l'un de la pluralité de terminaux cibles.

5. Procédé selon la revendication 1, l'obtention, par un terminal utilisateur, d'un identifiant de terminal d'un terminal d'authentification comprenant spécifiquement :
la détection, par le terminal utilisateur, de N terminaux cibles, et l'obtention d'un identifiant de terminal de chacun des N terminaux cibles, N étant un entier positif supérieur à 1 ; et
le fait que le premier message comprend l'identifiant de terminal du terminal d'authentification comprenant spécifiquement :
le fait que le premier message comprend des identifiants de terminal des N terminaux cibles ; le procédé comprenant en outre :
la détermination, par le serveur, parmi les N terminaux cibles, d'un terminal cible comme terminal d'authentification, la détermination comprenant spécifiquement :
la détermination, par le serveur, parmi les N terminaux cibles, de M terminaux cibles dont les comptes connectés correspondent au premier compte ; et la détermination, par le serveur parmi les M terminaux cibles, d'un terminal cible comme terminal d'authentification selon une manière prédéfinie, la manière prédéfinie comprenant indifféremment une fréquence d'utilisation de compte et/ou une priorité de compte et/ou un identifiant de terminal associé au premier compte et stocké dans le serveur et/ou un compte associé à un identifiant de terminal du terminal utilisateur et stocké dans le serveur ; ou
la détermination, par le serveur, du fait qu'aucun compte connecté de l'un quelconque des N terminaux cibles ne correspond au premier compte ; et la détermination, par le serveur, parmi les N terminaux cibles, d'un terminal cible comme terminal d'authentification selon la manière prédéfinie, la manière prédéfinie comprenant indifféremment une fréquence d'utilisation de compte et/ou une priorité de compte et/ou un identifiant de terminal associé au premier compte et stocké dans le serveur et/ou un compte associé à un identifiant de terminal du terminal utilisateur et stocké dans le serveur ; ou
l'envoi, par le serveur, d'un message de détermination au terminal utilisateur après la détermination, parmi les N terminaux cibles, de M terminaux cibles dont les comptes connectés correspondent au premier compte, le message de détermination étant utilisé pour demander au terminal utilisateur de déterminer le terminal d'authentification ; la détermination, par le terminal utilisateur, d'un premier terminal cible comme terminal d'authentification en fonction de la sélection de l'utilisateur ou de la sélection du terminal utilisateur, le premier terminal cible étant l'un des M terminaux cibles ; et
l'envoi, par le terminal utilisateur, d'un message de réponse au serveur en réponse au message de détermination, le message de réponse étant utilisé pour informer le serveur du terminal d'authentification déterminé ; ou
l'envoi, par le serveur, d'un message de détermination au terminal utilisateur après avoir déterminé qu'aucun compte connecté de l'un quelconque des N terminaux cibles ne correspond au premier compte, le message de détermination étant utilisé pour demander au terminal utilisateur de déterminer le terminal d'authentification ; la détermination, par le terminal utilisateur, d'un premier terminal cible comme terminal d'authentification en fonction de la sélection de l'utilisateur ou de la sélection du terminal utilisateur, le premier terminal cible étant l'un des N terminaux cibles ; et l'envoi, par le terminal utilisateur, d'un message de réponse au serveur en réponse au message de détermination, le message de réponse étant utilisé pour informer le serveur du terminal d'authentification déterminé.

6. Procédé selon la revendication 4 ou 5, la détermination d'un premier terminal cible comme terminal d'authentification en fonction de la sélection du terminal utilisateur comprenant spécifiquement : la sélection d'un premier terminal cible le plus proche du terminal utilisateur comme terminal d'authentification ; la sélection, comme terminal d'authentification, d'un premier terminal cible lié au terminal utilisateur ; ou la sélection, comme terminal d'authentification, d'un premier terminal cible qui réalise le plus fréquemment les opérations d'autorisation de paiement dans la transaction historique.

7. Procédé selon la revendication 1, le procédé comprenant en outre :
la réception, par le terminal utilisateur, d'un deuxième message qui est envoyé par le serveur lorsque le serveur détermine que le premier compte ne correspond pas au second compte, le deuxième message étant utilisé pour demander au terminal utilisateur de réaliser une commutation de compte ; et
l'envoi, par le terminal utilisateur, d'une demande d'autorisation de commutation de compte comprenant un identifiant de terminal du terminal utilisateur au terminal d'authentification en fonction du deuxième message, de sorte que le terminal d'authentification autorise, en fonction de l'identifiant de terminal du terminal utilisateur, le serveur à amener le terminal utilisateur à commuter du premier compte connecté au second compte ; ou
l'envoi, au serveur, d'un message utilisé pour indiquer l'approbation de la commutation de compte, de sorte que le serveur demande, au terminal d'authentification en fonction de l'identifiant de terminal du terminal d'authentification, l'autorisation d'amener le terminal utilisateur à commuter du premier compte connecté au second compte ; ou
l'envoi d'une demande de commutation de compte comprenant le second compte et un mot de passe du second compte au serveur, de sorte que le serveur amène le terminal utilisateur à commuter du premier compte connecté au second compte.

8. Procédé selon la revendication 1, le procédé comprenant en outre :
la réception, par le terminal utilisateur, d'un troisième message envoyé par le serveur, le troisième message comprenant un résultat d'une vérification réalisée par le serveur sur le premier compte et le second compte ; et
lors de la détermination, en fonction du résultat de vérification, du fait que le premier compte ne correspond pas au second compte, l'envoi, par le terminal utilisateur, d'une demande d'autorisation de commutation de compte comprenant un identifiant de terminal du terminal utilisateur au terminal d'authentification, de sorte que le terminal d'authentification autorise, en fonction de l'identifiant de terminal du terminal utilisateur, le serveur à amener le terminal utilisateur à commuter du premier compte connecté au second compte ; ou
l'envoi, au serveur, d'un message utilisé pour indiquer l'approbation de la commutation de compte, de sorte que le serveur demande, au terminal d'authentification en fonction de l'identifiant de terminal du terminal d'authentification, l'autorisation d'amener le terminal utilisateur à commuter du premier compte connecté au second compte ; ou
l'envoi d'une demande de commutation de compte comprenant le second compte et un mot de passe du second compte au serveur, de sorte que le serveur amène le terminal utilisateur à commuter du premier compte connecté au second compte.

9. Système comprenant un serveur et un terminal utilisateur, le terminal utilisateur comprenant :
une unité de réception (1001), configurée pour obtenir un identifiant de terminal d'un terminal d'authentification ; et
une unité d'envoi (1003), configurée pour envoyer un premier message au serveur, le premier message comprenant l'identifiant de terminal du terminal d'authentification ; et le serveur comprenant :
une unité de réception (1101), configurée pour recevoir le premier message ;
une unité de traitement (1102), configurée pour déterminer un second compte connecté du terminal d'authentification en fonction de l'identifiant de terminal du terminal d'authentification, et vérifier un premier compte connecté du terminal utilisateur à l'aide du second compte,
l'unité de traitement (1102) étant en outre configurée pour :
lorsque le premier compte ne correspond pas au second compte, commuter du premier compte connecté au second compte, et autoriser une transaction de paiement en utilisant le terminal d'authentification ;
lorsque le premier compte correspond au second compte, autoriser la transaction de paiement en utilisant le terminal d'authentification.

10. Système selon la revendication 9, le fait que le premier compte ne correspond pas au second compte comprenant spécifiquement : le fait que le premier compte est différent du second compte ; et
le fait que le premier compte correspond au second compte comprenant spécifiquement : le fait que le premier compte est le même que le second compte.

11. Système selon la revendication 9, le fait que le premier compte ne correspond pas au second compte comprenant spécifiquement : le fait que le premier compte et le second compte sont différents et ne sont pas liés l'un à l'autre ; et
le fait que le premier compte correspond au second compte comprenant spécifiquement : le fait que le premier compte est le même que le second compte, ou le fait que le premier compte et le second compte sont différents et sont liés l'un à l'autre.

12. Système selon la revendication 9, le terminal utilisateur comprenant en outre :
une unité de traitement (1002), configurée pour détecter une pluralité de terminaux cibles,
l'unité de traitement (1002) du terminal utilisateur étant en outre configurée pour déterminer un premier terminal cible comme terminal d'authentification en fonction de la sélection de l'utilisateur ou de la sélection du terminal utilisateur, le premier terminal cible étant l'un de la pluralité de terminaux cibles.

13. Système selon la revendication 9, l'obtention, par une unité de réception (1001) du terminal utilisateur, d'un identifiant de terminal d'un terminal d'authentification comprenant spécifiquement :
la détection de N terminaux cibles, et l'obtention d'un identifiant de terminal de chacun des N terminaux cibles, N étant un entier positif supérieur à 1 ; et
le fait que le premier message comprend l'identifiant de terminal du terminal d'authentification comprenant spécifiquement :
le fait que le premier message comprend des identifiants de terminal des N terminaux cibles, l'unité de réception (1101) du serveur étant configurée pour recevoir le premier message envoyé par le terminal utilisateur, et l'unité de traitement (1102) du serveur étant configurée pour déterminer, parmi les N terminaux cibles, un terminal cible comme terminal d'authentification, le fait que l'unité de traitement (1102) du serveur étant configurée pour déterminer, parmi les N terminaux cibles, un terminal cible comme terminal d'authentification comprenant spécifiquement :
le fait que l'unité de traitement (1102) du serveur est configurée pour :
déterminer, parmi les N terminaux cibles, M terminaux cibles dont les comptes connectés correspondent au premier compte ; et déterminer, parmi les M terminaux cibles, un terminal cible comme terminal d'authentification selon une manière prédéfinie, la manière prédéfinie comprenant indifféremment une fréquence d'utilisation de compte et/ou une priorité de compte et/ou un identifiant de terminal associé au premier compte et stocké dans le serveur et/ou un compte associé à un identifiant de terminal du terminal utilisateur et stocké dans le serveur ; ou
déterminer qu'aucun compte connecté de l'un quelconque des N terminaux cibles ne correspond au premier compte ; et déterminer, parmi les N terminaux cibles, un terminal cible comme terminal d'authentification selon la manière prédéfinie, la manière prédéfinie comprenant indifféremment une fréquence d'utilisation de compte et/ou une priorité de compte et/ou un identifiant de terminal associé au premier compte et stocké dans le serveur et/ou un compte associé à un identifiant de terminal du terminal utilisateur et stocké dans le serveur ; ou
le fait que l'unité d'envoi (1103) du serveur est configurée pour envoyer un message de détermination au terminal utilisateur après que l'unité de traitement (1102) du serveur a déterminé, parmi les N terminaux cibles, M terminaux cibles dont les comptes connectés correspondent au premier compte, le message de détermination étant utilisé pour demander au terminal utilisateur de sélectionner un terminal cible comme terminal d'authentification ; le fait que l'unité de réception (1001) du terminal utilisateur est configurée pour recevoir le message de détermination ; le fait qu'une unité de traitement (1002) du terminal utilisateur est configurée pour déterminer un premier terminal cible comme terminal d'authentification en fonction de la sélection de l'utilisateur ou de la sélection du terminal utilisateur, le premier terminal cible étant l'un des M terminaux cibles ; et le fait que l'unité d'envoi (1003) du terminal utilisateur est configurée pour envoyer un message de réponse au serveur en réponse au message de détermination, le message de réponse étant utilisé pour informer le serveur du terminal d'authentification déterminé ; et le fait que l'unité de réception (1101) du serveur est configurée pour recevoir le message de réponse ; ou
le fait que l'unité d'envoi (1103) du serveur est configurée pour envoyer un message de détermination au terminal utilisateur après que l'unité de traitement (1102) du serveur a déterminé qu'aucun compte connecté de l'un quelconque des N terminaux cibles ne correspond au premier compte, le message de détermination étant utilisé pour demander au terminal utilisateur de sélectionner un terminal cible comme terminal d'authentification ; le fait que l'unité de réception (1001) du terminal utilisateur est configurée pour recevoir le message de détermination ; le fait qu'une unité de traitement (1002) du terminal utilisateur est configurée pour déterminer un premier terminal cible comme terminal d'authentification en fonction de la sélection de l'utilisateur ou de la sélection du terminal utilisateur, le premier terminal cible étant l'un des N terminaux cibles ; et le fait que l'unité d'envoi (1003) du terminal utilisateur est configurée pour envoyer un message de réponse au serveur en réponse au message de détermination, le message de réponse étant utilisé pour informer le serveur du terminal d'authentification déterminé ; et le fait que l'unité de réception (1101) du serveur est configurée pour recevoir le message de réponse.

14. Système selon la revendication 13, le fait que l'unité de traitement (1002) du terminal utilisateur est configurée pour déterminer un premier terminal cible comme terminal d'authentification en fonction de la sélection du terminal utilisateur comprenant spécifiquement : le fait que l'unité de traitement (1002) du terminal utilisateur est configurée pour sélectionner un premier terminal cible le plus proche du terminal utilisateur comme terminal d'authentification ; sélectionner, comme terminal d'authentification, un premier terminal cible lié au terminal utilisateur ; ou sélectionner, comme terminal d'authentification, un premier terminal cible qui réalise le plus fréquemment les opérations d'autorisation de paiement dans la transaction historique.

15. Système selon la revendication 14, l'unité de réception (1001) du terminal utilisateur étant en outre configurée pour recevoir le deuxième message qui est envoyé par le serveur lorsque le serveur détermine que le premier compte ne correspond pas au second compte, le deuxième message étant utilisé pour demander au terminal utilisateur de réaliser une commutation de compte ; et
l'unité d'envoi (1003) du terminal utilisateur étant configurée pour : envoyer une demande d'autorisation de commutation de compte comprenant un identifiant de terminal du terminal utilisateur au terminal d'authentification en fonction du deuxième message, de sorte que le terminal d'authentification autorise, en fonction de l'identifiant de terminal du terminal utilisateur, le serveur à amener le terminal utilisateur à commuter du premier compte connecté au second compte ; ou
envoyer, au serveur, un message utilisé pour indiquer l'approbation de la réalisation de la commutation de compte, de sorte que le serveur demande, au terminal d'authentification en fonction de l'identifiant de terminal du terminal d'authentification, l'autorisation d'amener le terminal utilisateur à commuter du premier compte connecté au second compte ; ou
envoyer une demande de commutation de compte comprenant le second compte et un mot de passe du second compte au serveur, de sorte que le serveur amène le terminal utilisateur à commuter du premier compte connecté au second compte.
